(19) Europäisches Patentamt
European Patent Office
Office européen des brevets

(11) **EP 4 556 957 A1**

(12) **EUROPEAN PATENT APPLICATION**

(43) Date of publication:
**21.05.2025 Bulletin 2025/21**

(21) Application number: **23210075.0**

(22) Date of filing: **15.11.2023**

(51) International Patent Classification (IPC):
**G01S 19/20** (2010.01)     **G01S 19/49** (2010.01)

(52) Cooperative Patent Classification (CPC):
**G01S 19/20; G01S 19/49**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Trimble Inc.**
**Westminster, CO 80021 (US)**

(72) Inventors:
- **Ayres-Sampaio, Diogo**
  **Porto (PT)**
- **Görcke, Lorenz**
  **München (DE)**

(74) Representative: **Hoffmann Eitle**
**Patent- und Rechtsanwälte PartmbB**
**Arabellastraße 30**
**81925 München (DE)**

(54) **METHOD, SYSTEMS, AND COMPUTER PROGRAMS FOR ESTIMATING A POSITION AND GENERATING AT LEAST ONE PROTECTION LEVEL ASSOCIATED THEREWITH**

(57) A navigation satellite system (NSS) receiver (10) and/or a processing entity receiving data from the NSS receiver (10) estimate a position and generate a protection level (PL) associated with the estimated position. A PL is a statistical error bound ensuring that the estimate only exceeds the PL with a probability, the "integrity risk". An integrity estimator (40) uses state variables and computes its values based on time-propagated, IMU-based data and timely NSS observations. It uses a position error history state variable set (410) representing estimated errors in a position of the NSS receiver (10) at epochs preceding an estimation epoch. A time-propagated, NSS-based estimated position and a time-propagated PL set are generated, for the estimation epoch, based on the position error history state variable set (410), an IMU-based estimated position, a delayed estimated position, and a delayed PL set. Systems and vehicles using such a method are also disclosed.

Fig. 1a

EP 4 556 957 A1

**Description**

**[Field of technology]**

The invention relates to methods, systems, and computer programs for estimating a position and generating at least one protection level (PL) associated with the estimated position. The fields of application of the methods, systems, and computer programs include, but are not limited to, navigation, highly automated driving, autonomous driving, mapmaking, land surveying, civil engineering, construction, agriculture, disaster prevention and relief, and scientific research.

**[Background]**

Navigation satellite systems (NSS) include both global navigation satellite systems (GNSS) and regional navigation satellite systems (RNSS), such as the Global Positioning System (GPS) (United States), GLONASS (Russia), Galileo (Europe), BDS (China), QZSS (Japan), and the Indian Regional Navigational Satellite System (IRNSS, also referred to as NAVIC) (systems in use or in development). An NSS typically uses a plurality of satellites orbiting the Earth. The plurality of satellites forms a constellation of satellites. An NSS receiver detects a code modulated on an electromagnetic signal broadcast by a satellite. The code is also called a ranging code. Code detection includes comparing the bit sequence modulated on the broadcasted signal with a receiver-side version of the code to be detected. Based on the detection of the time of arrival of the code for each of a series of the satellites, the NSS receiver estimates its position. Positioning includes, but is not limited to, geolocation, i.e. the positioning on the surface of the Earth.

An overview of GPS, GLONASS, and Galileo is provided for example in sections 9, 10, and 11 of reference [1] (a list of references is provided at the end of the present description, after a list of abbreviations and acronyms).

Positioning using NSS signal codes provides a limited accuracy, notably due to the distortion the code is subject to upon transmission through the atmosphere. For instance, the GPS includes the transmission of a coarse/acquisition (C/A) code at about 1575 MHz, the so-called L1 frequency. This code is freely available to the public, whereas the Precise (P) code is reserved for military applications. The accuracy of code-based positioning using the GPS C/A code is approximately 15 meters, when taking into account both the electronic uncertainty associated with the detection of the C/A code (electronic detection of the time of arrival of the pseudorandom code) and other errors including those caused by ionospheric and tropospheric effects, ephemeris errors, satellite clock errors, and multipath propagation.

The carrier signals transmitted by the NSS satellites can also be tracked to provide an alternative, or complementary means of determining the range, or change in range between the receiver and satellite. Carrier phase measurements from multiple NSS satellites facilitate estimation of the position of the NSS receiver.

The approach based on carrier phase measurements has the potential to provide much greater position precision, i.e. down to centimetre-level or even millimetre-level precision, compared to the code-based approach. The reason may be intuitively understood as follows. The code, such as the GPS C/A code on the L1 band, has an effective chip length that is much longer than one cycle of the carrier on which the code is modulated. Code and carrier phase measurements have precisions that are roughly the same fraction of the respective chip length or wavelength. The position resolution may therefore be viewed as greater for carrier phase detection than for code detection.

However, in the process of estimating the position based on carrier phase measurements, the carrier phases are ambiguous by an unknown number of cycles. The fractional phase of a received signal can be determined but the additional number of cycles required to determine the satellite's range cannot be directly determined in an unambiguous manner. This is the so-called "integer ambiguity problem", "integer ambiguity resolution problem", or "phase ambiguity resolution problem", which may be solved to yield the so-called fixed-ambiguity solution (sometimes referred to simply as the fixed solution).

GNSS observation equations for code observations and for carrier phase observations are for instance provided in ref. [1], section 5. An introduction to the GNSS integer ambiguity resolution problem, and its conventional solutions, is provided in ref. [1], section 7.2. The person skilled in the art will recognize that the same or similar principles apply to RNSS.

The main GNSS observables are therefore the carrier phase and code (pseudorange), the former being generally much more precise than the latter, but ambiguous. These observables enable a user to obtain the geometric distance from the receiver to the satellite. With known satellite position and satellite clock error, the receiver position and receiver clock error can be estimated.

As mentioned above, the GPS includes the transmission of a C/A code at about 1575 MHz, the so-called L1 frequency. More precisely, each GPS satellite transmits continuously using two radio frequencies in the L-band, referred to as L1 and L2, at respective frequencies of 1575.42 MHz and 1227.60 MHz. With the ongoing modernization of the GPS, signals on a third L5 frequency are becoming available. Among the two signals transmitted on L1, one is for civil users and the other is for users authorized by the United States Department of Defense (DoD). Signals are also transmitted on L2, for civil users and DoD-authorized users. Each GPS signal at the L1 and L2 frequencies is modulated with a pseudo-random noise (PRN) code, and optionally with satellite navigation data. When GNSS satellites broadcast signals that do not contain navigation data, these signals are sometimes termed "pilot" signals, or "data-free" signals. In relation to GPS, two different PRN codes are transmitted by each satellite: a C/A code and a P code which is encrypted for DoD-authorized users to become a Y code. Each C/A code is a unique sequence of 1023 bits, which is repeated each millisecond. Other NSS systems also have satellites transmitting multiple signals on multiple carrier frequencies.

For some applications relying on the above-discussed techniques, the provision of integrity information may be desirable to indicate a level of trust that can be placed in the correctness of values of parameters estimated using these techniques. Integrity information may assist applications in deciding whether estimated parameters, such as an estimated position, can be trusted and are thus safe to use, or, on the contrary, cannot be trusted and may be unsafe to use.

Ref. [2] relates to a technique for high-accuracy and high-integrity GPS relative navigation applications. The approach relaxes the integrity requirements for obtaining a correct fixed solution by introducing so-called almost fixed solutions (candidate sets of integer ambiguities), "where only a few (typically just one) of the integer ambiguities are fixed incorrectly at a time by a small amount ($\pm 1$ cycle, etc.)" (p. 571, right-hand col., last paragraph). These almost fixed solutions form a so-called Enlarged Pull-In Region (EPIR), i.e. a region centered around the fixed solution. The probability of the almost-fixed solutions plus that of the correct fixed solution together have to meet the stringent integrity requirements. The precision of the almost fixed solution precision sits in-between the precision of the correctly-fixed solution and that of the float solution.

Ref. [3] relates to a method for calculating the integrity risk for carrier phase navigation algorithms. Specifically, the impact of incorrect fixes (incorrect integer ambiguity candidates) in the position domain is evaluated and tight upper bounds on the resulting navigation integrity risk are defined. A mechanism to implement this method with a partially fixed solution in a navigation system is also described. Namely, a set of integer ambiguity combinations is identified by a bootstrap rounding method to sequentially fix ambiguities. Ref. [4] discloses a similar technique.

Ref. [5] relates to generating protection level(s) (PL) for an application relying on NSS observations to produce an estimate of parameters, wherein a float solution is computed using NSS signals observed by a NSS receiver (ref. [5], paragraph [0034] and paragraph [0183], step 1), a best integer ambiguity combination that minimizes an error norm is identified based on the float solution (ref. [5], paragraph [0035] and paragraph [0183], step 4), and additional integer ambiguity combinations are identified, which have the smallest error norms that, together with the error norm of the best integer ambiguity combination, jointly satisfy the integrity risk (ref. [5], paragraph [0037] and paragraph [0183], step 7). A measure of spread of the best and additional integer ambiguity combinations is then computed and the PL(s) is then generated from the measure of spread (ref. [5], paragraph [0040] and paragraph [0183], step 10). Regarding the context in which some embodiments of the method of ref. [5] have been developed, see also ref. [5], paragraphs [0077] to [0082].

There is a constant need for improving the implementation of positioning or similar systems making use of NSS observables, and, in particular, for being able to reliably meet the integrity requirements of these systems, especially, but not only, in the context of safety-critical applications such as highly-automated driving and autonomous driving. This need may also arise when challenging environments, such as those with bridges or tunnels, are involved.

[Summary]

The present invention aims at addressing the above-mentioned need. The invention includes methods, systems, computer programs, computer program products, and storage mediums as defined in the independent claims. Particular embodiments are defined in the dependent claims.

In one embodiment, a method is carried out by a NSS receiver and/or a processing entity capable of receiving data from the NSS receiver, for estimating a position and generating at least one protection level (PL) associated with the estimated position. A PL is a statistical error bound ensuring that the estimated position only exceeds the PL with a probability, hereinafter referred to as "integrity risk". The method comprises the following steps and/or operations. An estimation process, hereinafter referred to as "integrity estimator", is operated. The integrity estimator uses state variables and computes values of its state variables at least based on: (i) data, hereinafter referred to as "time-propagated, IMU-based data", derived from data from an inertial measurement unit (IMU) suitable for estimating a change in position of the NSS receiver, and (ii) timely NSS observations made by the NSS receiver. The integrity estimator uses, among other state variables, a plurality of state variables, hereinafter referred to as "position error history state variable set", representing estimated errors in a position of the NSS receiver at a plurality of epochs preceding an estimation epoch. Further, an estimated position, hereinafter referred to as "time-propagated, NSS-based estimated position", of the NSS receiver, and at least one PL, hereinafter referred to as "time-propagated protection level set", associated with the time-propagated, NSS-based estimated position, are generated for the estimation epoch, at least based on: (a) the position error history state variable set; (b) an estimated position, hereinafter referred to as the "IMU-based estimated position", of the NSS receiver computed based on data from the IMU; (c) a delayed estimated position that is applicable to an epoch preceding the estimation epoch and that has been computed based on NSS observations made by the NSS receiver; and (d) at least one delayed PL, hereinafter referred to as "delayed protection level set", associated with the delayed estimated position.

The method creates the ability to improve availability and/or robustness of PLs by using, notably, the time-propagated, IMU-based data. The method may, in particular, allow bridging what would otherwise lead to a gap in PL availability during NSS signal tracking interruptions.

In one embodiment, a system comprises a NSS receiver and/or a processing entity capable of receiving data from the NSS receiver, the system being for estimating a position and generating at least one PL associated with the estimated position, and the system being configured for carrying out the above-described method. In one embodiment, a vehicle comprises such a system.

In some embodiments, computer programs, computer program products and storage media for storing such computer programs are provided. Such computer programs comprise computer-executable instructions configured for carrying out, when executed on a computer such as one embedded in, or otherwise part of, a NSS receiver or in another apparatus or device, or when executed on a set of computers such as a set of computers embedded in, or otherwise part of, a set of apparatuses or devices, the above-described method.

**[Brief description of the drawings]**

Embodiments of the present invention shall now be described in conjunction with the appended drawings in which:

Fig. 1a is a schematic diagram of a method in one embodiment of the invention;
Fig. 1b is a flowchart of the method schematically illustrated by the diagram of Fig. 1a;
Fig. 2 is a schematic diagram of a method in one embodiment of the invention, showing that an integrity estimator and a position and protection level (PL) time-propagator (also referred to as "position-and-PL-time-propagator") forming part of an integrity module;
Fig. 3 is a schematic diagram of a method in one embodiment of the invention, further involving buffering an IMU-based estimated position prior to using it for generating a time-propagated, NSS-based estimated position and a time-propagated protection level set;
Fig. 4 is a schematic diagram of a method in one embodiment of the invention, wherein generating a time-propagated, NSS-based estimated position and a time-propagated protection level set includes generating a corrected delta position and a corrected delta protection level set;
Figs. 5a to 5e schematically illustrate a process of locking of states in a position error history state variable set, in a method in one embodiment of the invention;
Fig. 6 is a flowchart of a process of deciding whether a new delayed estimated position and associated delayed protection level set becoming available shall trigger a locking occurrence, in one embodiment of the invention;
Fig. 7 is a schematic diagram of a method in one embodiment of the invention, further including operating an inertial navigator and wherein the inertial navigator receives corrections from an integrity estimator;
Fig. 8 is a schematic diagram of a method in one embodiment of the invention, including operating a navigation estimator and wherein an inertial navigator receives corrections from the navigation estimator;
Fig. 9 is a schematic diagram of a method in one embodiment of the invention, wherein each of a navigation estimator and an integrity estimator computes the values of their respective state variables further based on data from a further sensor(s) suitable for estimating a change in position of the NSS receiver;
Fig. 10 is a schematic diagram of a method in one embodiment of the invention, which further includes projecting a generated time-propagated protection level set to another point;
Fig. 11 is a schematic diagram of a method in one embodiment of the invention, which further includes transferring a generated time-propagated protection level set to a position output of an inertial navigator;
Fig. 12 is a schematic diagram of a method in one embodiment of the invention, which combines the embodiments illustrated with reference to Figs. 9 and 11;
Fig. 13 is a schematic diagram of a method in one embodiment of the invention, wherein each of a navigation estimator ("Nav Estimator") and an integrity estimator computes the values of their respective state variables notably based on data from DMI and other multi-sensor data;
Fig. 14a schematically illustrates APC previous position history states in one embodiment of the invention;
Fig. 14b schematically illustrates delta position computation with a locked APC history state in one embodiment of the invention; and
Fig. 15 schematically illustrates a system in one embodiment of the invention.

**[Detailed description]**

The present invention shall now be described in conjunction with specific embodiments. These serve to provide the skilled person with a better understanding but are not intended to in any way restrict the scope of the invention, which is defined by the appended claims. In particular, the embodiments described throughout the description can be combined to form further embodiments to the extent that they are not mutually exclusive.

Throughout the following description, the abbreviation "GNSS" is sometimes used. The invention is, however, not limited to global navigation satellite systems (GNSS) but also applies to regional navigation satellite systems (RNSS). Thus, it is to be understood that each occurrence of "GNSS" in the following can be replaced with "RNSS" to form additional embodiments.

In the art, the term "observables" is often used to refer to structures of an NSS signal from which observations or measurements can be made (PRN-code, carrier phase) (see e.g. ref. [7]: "The word *observable* is used throughout GPS literature to indicate the signals whose measurement yields the range or distance between the satellite and the receiver."). However, in common usage, and in the present document, the term "observable" (also referred to as "NSS observable") is also interchangeably used to refer to the observation itself, such that, for example, "carrier phase observable" has the same meaning as "carrier phase observation". Further, when the present document describes that an NSS signal is observed, this means that at least an observation (measurement) of at least an observable of the NSS signal is made.

When the term "real-time" is used in the present document, it means that there is an action (e.g., data is processed or transmitted, results are computed) as soon as the required information for that action is available. Thus, certain latency exists, which depends on various aspects depending on the involved component(s) of the system.

When the verb "broadcast" (and "broadcasting", etc.) is used, this also covers embodiments where the transmission is a form of multicasting.

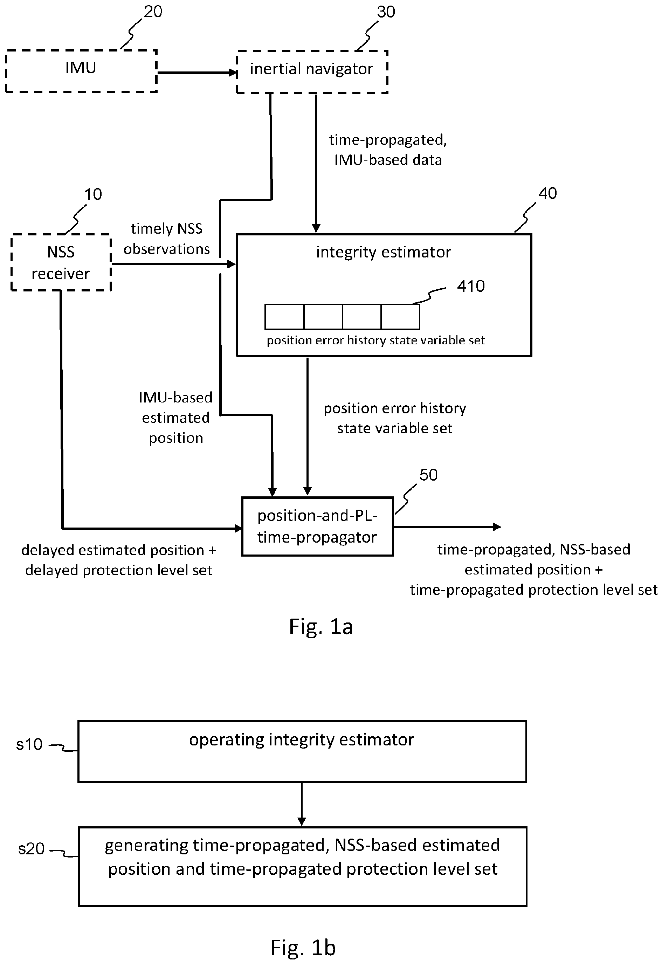

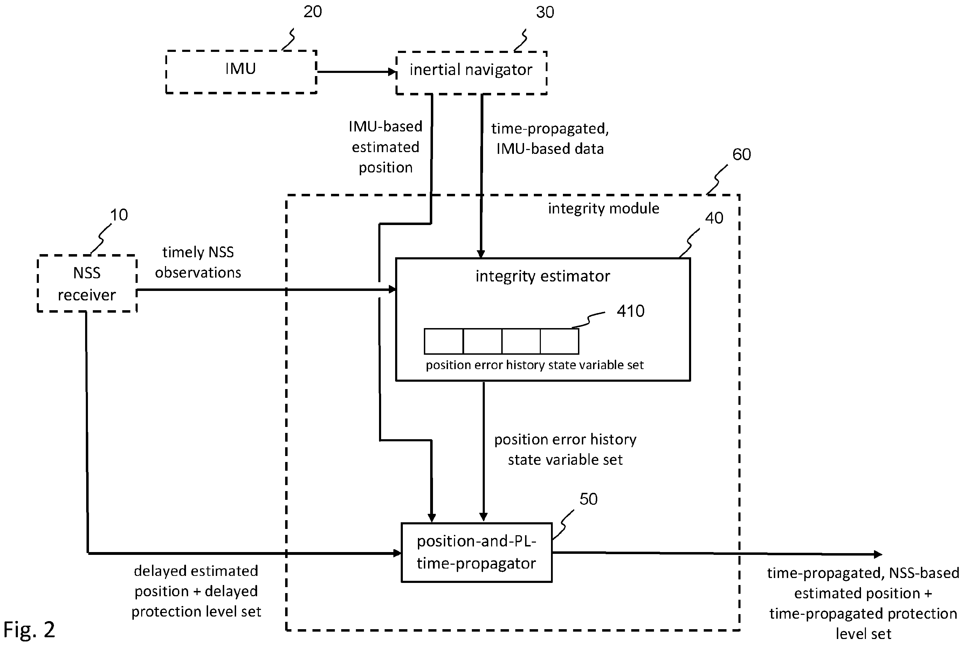

Fig. 1a is a schematic diagram of a method in one embodiment of the invention, and Fig. 1b is a corresponding flowchart of that method. The method may be carried out by a NSS receiver 10 configured for observing NSS signals from a plurality of NSS satellites over multiple epochs, by another processing entity or system capable of receiving data from NSS receiver 10, or by NSS receiver 10 in conjunction with such other processing entity or system (i.e., by NSS receiver 10 and another processing entity or system). The processing entity or system may be located remotely from NSS receiver 10 and may, for example, receive data representing the NSS observations from NSS receiver 10. In the embodiment schematically illustrated in Figs. 1a and 1b, the processing entity or system comprises, among other elements, integrity estimator 40 (which will be described further below), which receives timely NSS observations from NSS receiver 10. Another element of the processing entity or system is position-and-PL-time-propagator 50 (which will also be described further below), which receives an IMU-based estimated position from an inertial navigator 30 and other information directly or indirectly from integrity estimator 40. Together, integrity estimator 40 and position-and-PL-time-propagator 50 may form, in some embodiments, a single software module, hardware module, and/or firmware module, here referred to "integrity module" 60, as schematically illustrated in Fig. 2.

NSS receiver 10 comprises at least one antenna, i.e. it may comprise a single antenna or a plurality of antennas. If NSS receiver 10 comprises one antenna configured to receive signals at one frequency, there may be a single electrical antenna phase centre (APC). If NSS receiver 10 comprises one antenna configured to receive signals at a plurality of frequencies (i.e., different frequencies broadcasted by NSS satellites, whether from one NSS or from a plurality of NSS), there may be one APC per frequency, i.e. in total a plurality of APCs. Likewise, there are a plurality of APCs if NSS receiver 10 comprises a plurality of antennas. The methods are mainly described in the present document for a single APC -and corresponding NSS signals and measurements- associated with a single frequency. However, the methods, using antenna phase correction tables if required as practiced in the art, may also be applied for a plurality of APCs -and corresponding NSS signals and measurements- associated with different frequencies in parallel.

The method aims at estimating a position, such as a position of NSS receiver 10, which may for example be a rover receiver (also called "rover system" or simply "rover") or a position of an APC of NSS receiver 10. The method may eventually lead to estimating a position of NSS receiver 10 or a position of an APC of NSS receiver 10. In one embodiment, the position is a position relative to a reference point or initial point, whose absolute position need not necessarily be precisely known, and the method may aim at estimating a trajectory relative to the reference point or initial point.

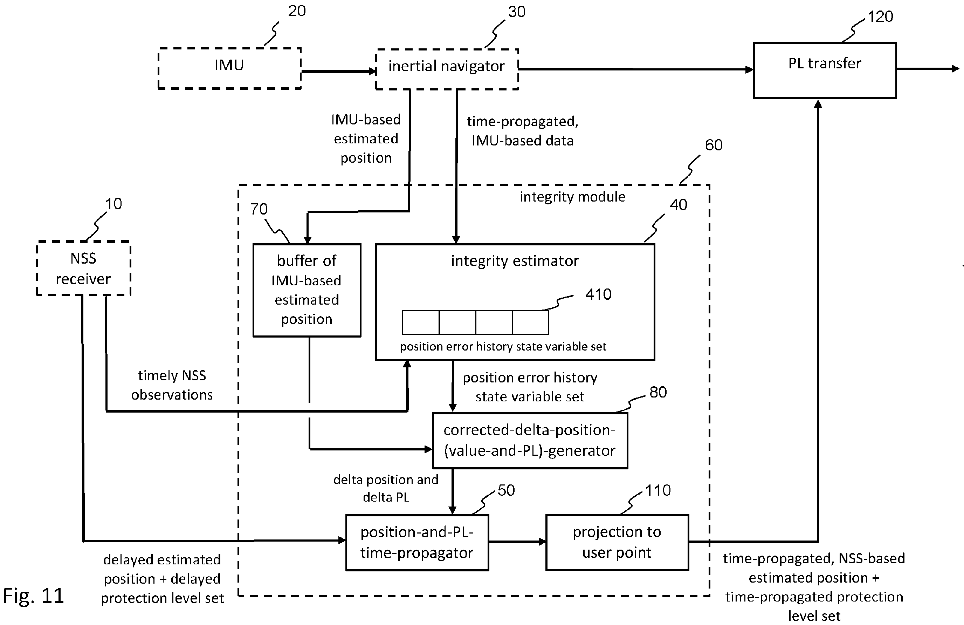

The method also aims at generating one or more protection levels associated with the estimated position, for an application that relies on NSS observations to produce the estimated position (which is also referred to simply as the "estimate"). As explained in ref. [5], paragraph [0032], a protection level (PL) is a statistical error bound ensuring that the estimate only exceeds the PL with a probability, here referred to as the "integrity risk". The integrity risk is a number set according to the integrity requirement(s) of the application. The PL may be regarded as the uncertainty of the estimate. In one embodiment, the integrity risk is a number set with respect to a time interval to which the integrity risk applies. That is, in this embodiment, the PL is a statistical error bound ensuring that the estimate only exceeds, within said time interval, the PL with a probability being the integrity risk. In that respect, see also ref. [5], paragraphs [0089] to [0093], including its Fig. 11. The integrity risk may for example be set per second, per minute, or per hour. Other time intervals with respect to which the integrity risk is set may be used, however. For the sake of convenience, the integrity risk discussed in the following is considered to be set per NSS receiver epoch, i.e. per GNSS data epoch, which may for example be one second.

In one embodiment, the integrity risk is a number equal to or smaller than $10^{-3}$. In another embodiment, the integrity risk is a number comprised in a range between $10^{-5}$ and $10^{-9}$. In yet another embodiment, the integrity risk is a number comprised in a range between 10$^{-7}$ and 10$^{-9}$. In other embodiments, the integrity risk may be even smaller, especially for safety-of-life applications.

The application relying on NSS observations to produce an estimated position may for example be a highly automated driving or autonomous driving application relying on NSS observations to produce an estimate of the position, velocity, or acceleration of a vehicle.

In step s10, an estimation process, here referred to as "integrity estimator" 40, is operated. Integrity estimator 40 uses state variables and computes values of its state variables at least based on (i) data, here referred to as "time-propagated, IMU-based data", derived from data from an inertial measurement unit (IMU) 20 suitable for estimating a change in position of NSS receiver 10, and on (ii) timely NSS observations made by NSS receiver 10.

As schematically illustrated in Fig. 1a, the time-propagated, IMU-based data may come from inertial navigator 30, which may be, or may form part of, an inertial navigation system (INS) as described in below section C, titled "Inertial Navigation System". The time-propagated, IMU-based data may comprise a predicted position (i.e., predicted by inertial navigator 30) of NSS receiver 10 (e.g., a predicted position of an APC of NSS receiver 10), and information about the attitude of NSS receiver 10 (which is useful for defining a state transition model, e.g. a state transition matrix, in integrity estimator 40). Optionally, the time-propagated, IMU-based data may also comprise information about velocity of an APC of NSS receiver 10. Information about the distance between IMU 20 and NSS receiver 10 should also be known to integrity estimator 40, as a person skilled in the art would recognize.

The timely NSS observations come, directly or indirectly, from NSS receiver 10. The NSS observations coming from NSS receiver 10 are said to be timely observations in comparison with the delayed information (which will be described further below) also coming from NSS receiver 10. The term "timely" means, in one embodiment, that the NSS observations are transmitted to integrity estimator 40 as soon as the NSS observations are available at NSS receiver 10. In one embodiment, the timely NSS observations are time-differenced carrier phase NSS observations, also referred to as "delta-phase observations". The processing of time-differenced carrier phase observations, also referred to as "delta phase" processing, is known in the art for precise position propagation to the current epoch. The basic delta phase processing principles are for example explained in ref. [20], pp. 11-13, paragraphs [0035] to [0047]. In other words, in that embodiment, the timely NSS observations do not represent an absolute position whereas the time-propagated, IMU-based data from inertial navigator 30 may comprise a predicted absolute position.

Optionally, integrity estimator 40 may use additional data to compute the values of its state variables, such as data from a broadcasted correction stream (see e.g. ref. [8] and [9]).

Integrity estimator 40 is or comprises an algorithm, procedure, or process, or a piece of software, firmware, and/or hardware configured for implementing such an algorithm, procedure, or process, in which a set of state variables (or "state vector") is maintained over time, i.e. the values of the state variables are estimated based on measurements made over time. The measurements may comprise data representing observed NSS signals and data from other sensor(s). Integrity estimator 40 involves or comprises, in one embodiment, a Kalman filter and/or a robust estimator. The invention is, however, not limited to the use of Kalman filter(s) and/or robust estimator(s). Other estimation processes, filters, or filter techniques may be used.

Integrity estimator 40 may for example operate together with inertial navigator 30 as an aided INS (AINS), as described in below section D, titled "Aided INS", or in ref. [10], paragraphs [0086] to [0093]. Integrity estimator 40 may also be integrated with inertial navigator 30 as described in ref. [6], Section 14.1 (i.e., pp. 420-433). In particular, one approach may be to use a so-called error-state Kalman filter (see for example ref. [6], Section 14.1.7), in which "the integrated navigation solution comprises the navigation solution of a reference navigation system, corrected using measurements from the other constituent navigation systems", wherein the reference navigation system is "an INS or other dead-reckoning system" (ref. [6], p. 432).

Some of integrity estimator's 40 state variables may represent, for example, the position of one or more points of, or associated with, NSS receiver 10 (such as the position of an APC of NSS receiver 10), any state relating to inertial navigator 30, an offset in the position of one or more points of, or associated with, NSS receiver 10 relative to another position (the offset per se being therefore a relative position), an offset in the position of one or more points of, or associated with, NSS receiver 10 relative to another epoch, the rate of change of the position, the rate of change of the offset in the position, a bias related to NSS receiver 10, a bias related to any of the NSS satellites, a bias related to any of the satellite systems, a bias related to any of the NSS signals, the rate of change of any of the said biases, or any combination of the above.

Furthermore, and more specifically, integrity estimator 40 uses, among other state variables, a plurality of state variables 410, here referred to as "position error history state variable set" 410, representing estimated errors in a position of NSS receiver 10 (i.e., estimated errors in the time-propagated, IMU-based position of NSS receiver 10 as predicted by inertial navigator 30 and provided to integrity estimator 40) at a plurality of epochs preceding an estimation epoch. Three values corresponding to a three-dimensional position may be associated with each epoch in position error history state variable set 410. Namely, a single history state may be defined in a so-called Earth or ECEF frame so that each history state may have three components (X, Y, Z).

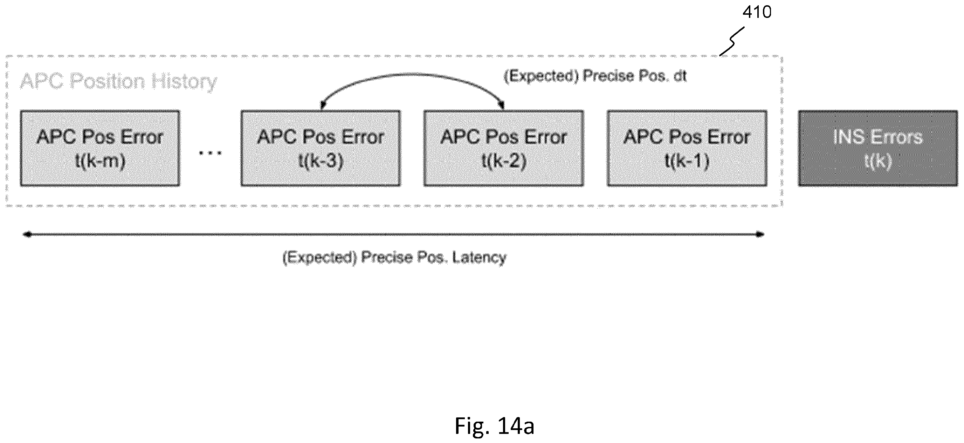

The estimation epoch of integrity estimator 40 may be the current epoch when carrying out the method in real-time, or the estimation epoch may be an arbitrary reference epoch as the method may also be carried out in a post-processing manner. The time increment between two successive epochs associated with estimated errors in position error history state variable set 410, i.e. the time increment between two position error history states, may depend on the rate at which delayed NSS-based PLs are generated (typically smaller than or equal to 1 Hz). That is, in one embodiment, a position error history state is aligned with the new delayed NSS-based PL so that the new delayed NSS-based PL can be propagated to the current epoch (see also Figs. 14a-b).

The IMU-based data rate is the same as the integrity estimator's 40 rate. However, the IMU-based data rate can be different from the raw IMU data rate (typically larger than or equal to 20 Hz) used by inertial navigator 30 to generate IMU-based data. In principle, everything can be run at a higher rate but this is generally at the expense of an increased processing load.

In one embodiment, the method may involve the following sampling rates: (1) IMU data rate: raw IMU data sampling rate (typically larger than or equal to 20 Hz); (2) IMU-based data rate: rate at which time-propagated, IMU-based data is provided to integrity estimator 40 (the IMU-based data rate needs to be larger than or equal to the integrity estimator rate); (3) NSS data rate: raw NSS data (or timely NSS observations) sampling rate (typically 1 Hz but can be higher); (4) integrity estimator rate: rate at which integrity estimator 40 is updated, including time and measurement update steps, where the time update rate should be the same as the IMU-based data rate (see above point (2)) and the measurement update rate should the same as the NSS data rate (see above point (3)); (5) delayed NSS position and delayed PL rate: rate at which NSS precise (but delayed) positions and PLs are generated (typically smaller than or equal to 0.5 Hz); and (6) position error history states sampling rate: should match the delayed NSS position and delayed PL rate (see above point (5)). Since the delayed NSS position and delayed PL rate (5) may be unknown, the position error history states sampling rate and time span may be adapted based on the expected rate (5) and latency (see also Figs. 14a-b). The expected values may be computed based on previously received delayed GNSS positions.

In step s20, position-and-PL-time-propagator 50 generates, for the estimation epoch, an estimated position, here referred to as "time-propagated, NSS-based estimated position", of NSS receiver 10, and at least one PL, here referred to as "time-propagated protection level set", associated with the time-propagated, NSS-based estimated position. The term "for the estimation epoch" means here that the time-propagated, NSS-based estimated position and the time-propagated protection level set apply to the estimation epoch. The time-propagated protection level set may comprise two PL values corresponding to a three-dimensional position, i.e. a horizontal PL and a vertical PL. Position-and-PL-time-propagator 50 may be or may comprise, in some embodiments, a piece of software, firmware, and/or hardware configured for generating the time-propagated, NSS-based estimated position and the time-propagated protection level set. Specifically, position-and-PL-time-propagator 50 generates s20 the time-propagated, NSS-based estimated position and the time-propagated protection level set at least based on: (a) position error history state variable set 410; (b) an estimated position, here referred to as the "IMU-based estimated position", of NSS receiver 10 computed based on data from IMU 20; (c) a delayed estimated position that is applicable to an epoch preceding the estimation epoch and that has been computed based on NSS observations made by NSS receiver 10; and (d) at least one delayed PL, here referred to as "delayed protection level set", associated with the delayed estimated position.

Position error history state variable set 410 may be transmitted from integrity estimator 40 to position-and-PL-time-propagator 50, as schematically illustrated in Fig. 1a. In one embodiment, the transmission of position error history state variable set 410 from integrity estimator 40 to position-and-PL-time-propagator 50 means that values of the state variables of position error history state variable set 410 maintained by integrity estimator 40 are transmitted from integrity estimator 40 to position-and-PL-time-propagator 50.

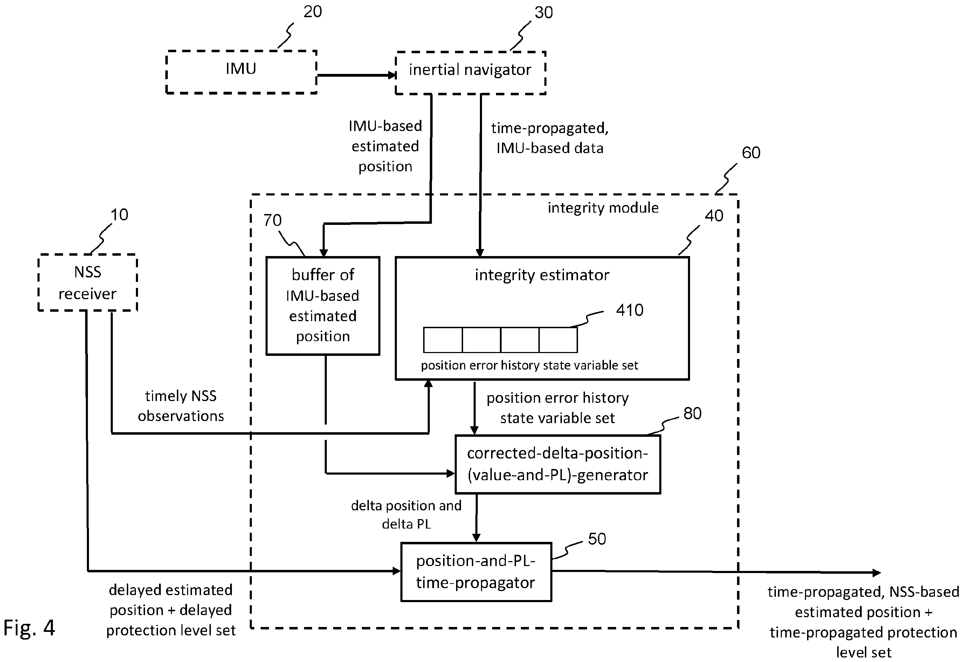

Position error history state variable set 410 may be transmitted directly (as illustrated in Fig. 1) or indirectly (as illustrated for example in Fig. 4) from integrity estimator 40 to position-and-PL-time-propagator 50. In one embodiment, position-and-PL-time-propagator 50 uses corrected changes in position over time to propagate the delayed positions in time. In one embodiment, position-and-PL-time-propagator 50 uses corrected changes in position over time and an estimated variance (or standard deviation) of these corrected changes, which is scaled depending on the integrity risk, to propagate the delayed positions and the delayed PLs in time. This may for example be done as explained with reference to Fig. 4 below.

Likewise, the IMU-based estimated position may be transmitted from inertial navigator 30 to position-and-PL-time-propagator 50, as schematically illustrated in Fig. 1a. Inertial navigator 30 computes the IMU-based estimated position based on data from IMU 20, which is suitable for determining a change in velocity of an APC of NSS receiver 10. In one embodiment, IMU 20 is rigidly attached to an antenna or antennas of NSS receiver 10. The attachment may be direct or indirect. For example, NSS receiver's 10 antenna(s) may be mounted on the roof of a vehicle while IMU 20 may be attached to the vehicle's body (or frame) without necessarily being mounted on its roof.

Furthermore, the delayed estimated position and the delayed protection level set are both transmitted from NSS receiver 10 to position-and-PL-time-propagator 50, where they are time-propagated (i.e., propagated in time) to the estimation epoch, i.e. either time-propagated to the current epoch if the method is performed in real-time or time-propagated to a reference epoch if the method is performed in a post-processing manner. The time-propagation is a main aim of generating step s20. In one embodiment, the delayed protection level set comprises a horizontal component (e.g., one value $PL_{xy}$) and a vertical component (e.g., one value $PL_z$), both corresponding to the same epoch. In one embodiment, the delayed protection level set comprises three components e.g., (i) $PL_{north}$, $PL_{east}$, $PL_{down}$, or (ii) $PL_x$, $PL_y$, $PL_z$, or (iii) an along-track component, a cross-track component, and an up-component (which may be advantageous for automotive applications).

The method schematically illustrated by Figs. 1a and 1b thus enables the generation of the time-propagated, NSS-based estimated position and the time-propagated protection level set by time-propagating (i.e., propagating in time), to the estimation epoch, latent NSS positions (the delayed estimated positions) and latent NSS-based PLs (the delayed protection level sets), using multi-sensor data in order to improve availability and robustness of the PLs. Robustness benefits include the ability to validate latent NSS-based PLs by means of the multi-sensor propagated PLs. The multi-sensor data comprise the time-propagated, IMU-based data and the timely NSS observations. In that context, position error history state variable set 410 allows to keep the correlation between the previous and current positions (or previous positions and estimation epoch's position if the method is not performed in real-time), for example in a covariance matrix of integrity estimator 40, thus permitting the time propagation of the NSS-based positions and PLs. This makes it possible to improve availability and robustness of PLs and, in turn, this may allow bridging what would otherwise lead to a gap in PL availability during NSS signal tracking interruptions. PLs generated based only on NSS observations would generally not be able to meet the demands for near 100% availability due to frequent signal interruptions. In other words, the method enables the production of PLs in challenging environments, which may be beneficial for safety-critical applications such as highly-automated driving and autonomous driving.

In embodiments in which position-and-PL-time-propagator 50 uses corrected changes in position over time to propagate the delayed positions in time (as explained for example with reference to Fig. 4 below), the correlation between the previous and current positions may be kept in a covariance matrix of integrity estimator 40 and then used to compute the covariance of the corrected changes in position over time to eventually propagate the delayed NSS-based positions and PLs in time.

In one embodiment, the method is performed at least partially as part of a data post-processing process. In other words, the invention is not limited to a real-time operation. Rather, it may be applied for processing pre-collected data to determine a position, trajectory, or other information, in post-processing. For example, the observations may be retrieved from a set of data which was previously collected and stored; the processing may be conducted for example in an office computer long after the data collection and thus not in real-time.

In one embodiment (which may be referred to as "reverse-time, post-processing embodiment"), the method is performed at least partially in a post-processing manner (as explained in the preceding paragraph), and the epochs are processed in reverse time. This reflects the possibility of running the method in reverse time. That is, for post-processing applications, the data, i.e. the NSS observables, etc., can effectively be run backwards, and all of what is described in the present document can still be applied.

In one embodiment, the method is performed in both forward and reverse time post-processing. This may be advantageous in that, in a forward processing run, it takes time to resolve integer carrier phase ambiguities immediately following some tracking interruption, such as that caused by an overpass. These data segments can often be populated with integer resolved solutions when processing in reverse time.

In one embodiment, the method described with reference to Figs. 1a and 1b further comprises a step of observing NSS signals, including the timely NSS observations. In that embodiment, the method is therefore at least partially performed by NSS receiver 10. In one embodiment, the method described with reference to Figs. 1a and 1b comprises a step of generating the time-propagated IMU-based data and a step of generating the IMU-based estimated position. In that embodiment, the method may at least partially be performed by inertial navigator 30, which generates the time-propagated IMU-based data and the IMU-based estimated position. In another embodiment, the method described with reference to Figs. 1a and 1b comprises both observing NSS signals, including the timely NSS observations, and generating the time-propagated IMU-based data and the IMU-based estimated position.

In one embodiment, NSS receiver 10 observes NSS signals, including the timely NSS observations, and NSS receiver 10 then transmits data representing the observed NSS signals, including the timely NSS observations, or information derived therefrom, to another processing entity or set of processing entities in charge of carrying out steps s10 and s20, which then receives data including the timely NSS observations. In one embodiment, inertial navigator 30 generates the time-propagated IMU-based data and the IMU-based estimated position and transmits those to another processing entity or set of processing entities in charge of carrying out steps s10 and s20. In another embodiment, the method described with reference to Figs. 1a and 1b comprises both a step of receiving data including the timely NSS observations and a step of receiving the time-propagated IMU-based data and the IMU-based estimated position.

The transmission, from NSS receiver 10, of data including the timely NSS observations to integrity estimator 40, the transmission, from inertial navigator 30, of the time-propagated IMU-based data and the IMU-based estimated position to integrity estimator 40, the transmission of other information to integrity estimator 40, to position-and-PL-time-propagator 50, and/or from integrity estimator 40 to position-and-PL-time-propagator 50, and any other transmission of information as part of the method may for example be carried out in the form of data packets, such as IP packets, through, for example, any one of, or a combination of, a local area network (LAN), the Internet, a cellular network, and a suitable satellite link. The person skilled in the art would, however, appreciate that other forms of wired or wireless transmission may be used, such as, and without being limited to, wireless transmissions based on Bluetooth, Wi-Fi, or Li-Fi. In one embodiment, the timely NSS observations, the time-propagated IMU-based data, and the IMU-based estimated position are transmitted in real-time, i.e. as soon as available (in line with the above-mentioned definition of the term "real-time"). The data may be encoded and/or encrypted prior to transmission. Upon reception, the IMU-based estimated position may be buffered (as will be explained below) or, alternatively, the IMU-based estimated position may be buffered by inertial navigator 30 prior to transmission.

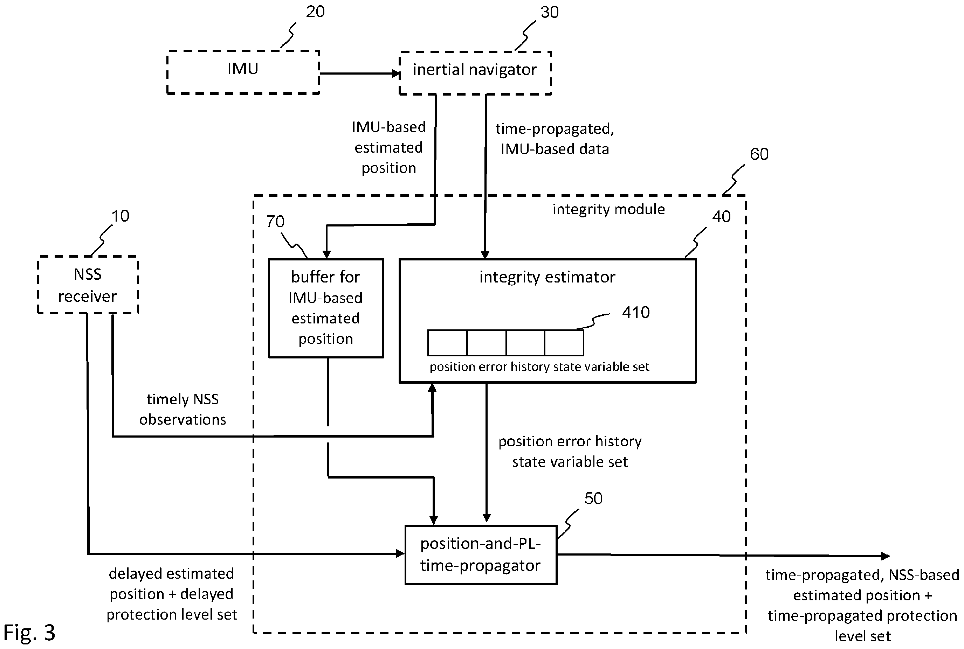

Fig. 3 is a schematic diagram of a method in one embodiment of the invention, the method comprising buffering the IMU-based estimated position prior to position-and-PL-time-propagator 50 using it in generating s20 the time-propagated, NSS-based estimated position and the time-propagated protection level set. For example, integrity module 60 may comprise a buffer 70 for storing the IMU-based estimated position, as schematically illustrated in Fig. 3. Alternatively, a buffer may be provided in inertial navigator 30 rather than in integrity module 60. The buffer may in fact be anywhere provided that the buffered data is accessible by integrity module 60. Buffering the IMU-based estimated position enables to deal with the situation where the rate of arrival of the IMU-based estimated position is higher than the rate of arrival of the delayed estimated position (i.e., the delayed precise position) and delayed protection level set.

Fig. 4 is a schematic diagram of a method in one embodiment of the invention, wherein generating s20 the time-propagated, NSS-based estimated position and the time-propagated protection level set comprises the following steps and/or operations.

First, a corrected change in position over time, here referred to as "corrected delta position", and at least one corrected change in PL over time, here referred to as "corrected delta protection level set", may be generated based on position error history state variable set 410 from integrity estimator 40, and on the IMU-based estimated position from buffer 70. This first operation may for example be performed by an element which is here referred to "corrected-delta-position-(value-and-PL)-generator" 80, as schematically illustrated in Fig. 4. The term "delta" may be regarded here as synonymous to the term "time-differenced".

In one embodiment, a corrected delta position is computed as follows. As explained above, position error history state variable set 410 comprises estimates of the errors in an APC position predicted by inertial navigator 30. The position change from epoch k1 to k2, i.e. the corrected delta position, may for example be computed as follows:

$$\text{deltaPosApc}(k1, k2) = (\text{posApc}_{k2} + \text{posApcError}_{k2}) - (\text{posApc}_{k1} + \text{posApcError}_{k1})$$

where:

> $\text{posApc}_{k1}$ and $\text{posApc}_{k2}$ are the APC positions predicted by inertial navigator 30 at epochs k1 and k2, respectively; and $\text{posApcError}_{k1}$ and $\text{posApcError}_{k2}$ are integrity estimator's 40 position error estimates at epochs k1 and k2, respectively (thus, $\text{posApcError}_{k1}$ and $\text{posApcError}_{k2}$ are values of position error history state variable set 410).

$\text{posApcError}_{k1}$ and $\text{posApcError}_{k2}$ are included in the position change computation as they constitute corrections to the positions predicted by inertial navigator 30. These corrections are computed in integrity estimator 40. The delayed protection level set refers to an APC of NSS receiver 10 and so the corrected delta positions may also be computed at an APC of NSS receiver 10. In one embodiment, a corrected delta position is computed in accordance with, or using, equations (1) and (2) as described in section B.1 below.

In one embodiment, the corrected delta protection level set is computed based on the standard deviation or variance of the corrected delta position considering the integrity risk, so that the delta position covariance matrix is scaled. This may for example be implemented in accordance with, or using, equations (3) and (4) as described in section B.1 below. In other words, in this embodiment, the standard deviation or variance of delta positions (i.e., the differences between the position errors in integrity estimator 40) is computed and scaled depending on the integrity risk, and the scale delta position standard deviation or variance is used to propagate the delayed PLs.

Second, the time-propagated, NSS-based estimated position and the time-propagated protection level set may be generated based on the corrected delta position and the corrected delta protection level set from corrected-delta-position-(value-and-PL)-generator 80, and on the delayed estimated position and the delayed protection level set from NSS receiver 10. In particular, the corrected delta position and the corrected delta protection level set are used to propagate, in time, the delayed estimated position and the delayed protection level set. This second operation may for example be performed by position-and-PL-time-propagator 50, as schematically illustrated in Fig. 4. In that context, buffering the IMU-based estimated position (e.g., in buffer 70) enables to compute a corrected delta position from the delayed estimated position epoch (i.e., the epoch to which delayed estimated position applies) to the estimation epoch, as the computation is based on an IMU-based estimated position that relates to the same point in time as the point in time to which the delayed estimated position (i.e., the delayed precise position) relates.

In one embodiment, the method further comprises, each time a delayed estimated position and associated delayed protection level set become available (i.e., available for processing at position-and-PL-time-propagator 50), or at least at some instances when a delayed estimated position and associated delayed protection level set become available (i.e., available for processing at position-and-PL-time-propagator 50), locking, in position error history state variable set 410 (maintained by integrity estimator 40), the state variable or state variables corresponding to the epoch to which the delayed estimated position and associated delayed protection level set relate. Locking, in position error history state variable set 410, a state variable means that the state variable remains in position error history state variable set 410 until a condition, here referred to as "unlocking condition", is met, in which case the state variable is unlocked. Locking a state variable in position error history state variable set 410 does not mean that the value of the state variable must remain constant. The value of the locked state variable may, and typically will, change over time as measurements are inputted to integrity estimator 40.

In one embodiment, the unlocking condition is met when a new delayed estimated position and associated delayed protection level set become available (i.e., available for processing at position-and-PL-time-propagator 50). In this case, the state variable(s) that was locked is unlocked, and the state variable or state variables corresponding to the epoch to which the new delayed estimated position and associated delayed protection level set relate is locked in position error history state variable set 410.

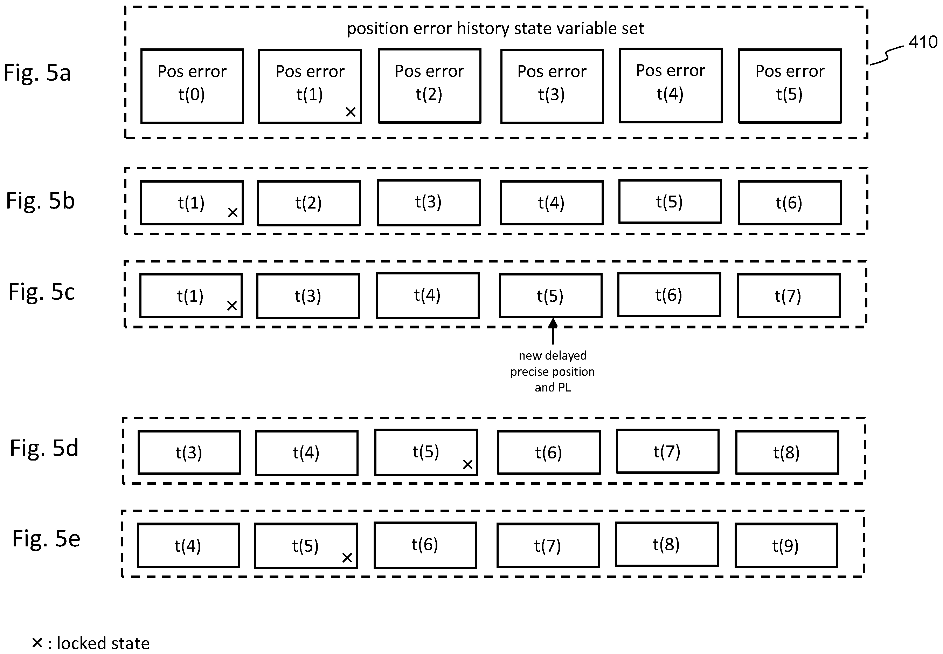

In one embodiment, at each estimation epoch, the state variable of position error history state variable set 410 that, among the state variables that are not locked, corresponds to the oldest epoch is removed from position error history state variable set 410. An example of implementation of this process is schematically illustrated by Figs. 5a to 5e.

Fig. 5a schematically illustrates an exemplary position error history state variable set 410 comprising six state variables, each representing representing an estimated error in a position of NSS receiver 10 at a plurality of epochs preceding an estimation epoch, such as the current epoch (when carrying out the method in real-time). Namely, the first state variable (labelled "Pos error t(0)") represents an estimated error in a position of NSS receiver 10 at an epoch t(0), the second state variable (labelled "Pos error t(1)") represents an estimated error in a position of NSS receiver 10 at epoch t(1), the third state variable (labelled "Pos error t(2)") represents an estimated error in a position of NSS receiver 10 at epoch t(2), the fourth state variable (labelled "Pos error t(3)") represents an estimated error in a position of NSS receiver 10 at epoch t(3), the fifth state variable (labelled "Pos error t(4)") represents an estimated error in a position of NSS receiver 10 at epoch t(4), and the sixth state variable (labelled "Pos error t(5)") represents an estimated error in a position of NSS receiver 10 at epoch t(5), which is the newest epoch (the closest to the current epoch). In position error history state variable set 410, state variable "Pos error t(1)" is locked as it corresponds to an epoch to which the newest delayed estimated position and associated delayed protection level set that have become available relate. A locked state is represented by the symbol "$\times$" (multiplication sign) in Figs. 5a to 5e.

At the next estimation epoch, as schematically illustrated by Fig. 5b, state variable "Pos error t(0)" (simply labelled "t(0)" in Fig. 5b) is removed from position error history state variable set 410 because it corresponds to the oldest epoch and it is not locked. A new state variable "Pos error t(6)" (simply labelled "t(6)" in Fig. 5b) is added. It represents an estimated error in a position of NSS receiver 10 at epoch t(6), which is now the newest epoch (the closest to the current epoch). State variables corresponding to epochs t(1) to t(5) remain in position error history state variable set 410.

At the next estimation epoch, as schematically illustrated by Fig. 5c, state variable "Pos error t(2)" is removed from position error history state variable set 410 because, among the state variables that are not locked, it corresponds to the oldest epoch. A new state variable "Pos error t(7)" is added, which represents an estimated error in a position of NSS receiver 10 at epoch t(7), which is now the newest epoch (the closest to the current epoch). State variable "Pos error t(1)" is not removed from position error history state variable set 410 because, although it corresponds to the oldest epoch, it is locked. State variables corresponding to epochs t(3) to t(6) also remain in position error history state variable set 410.

A new delayed estimated position and associated delayed protection level set then become available. They correspond to epoch t(5), as illustrated by the wording "new delayed precise position and PL" and the accompanying arrow in Fig. 5c. The unlocking condition is therefore met, so that state variable "Pos error t(1)" is unlocked, and state variable "Pos error t(5)" is locked.

At the next estimation epoch, as schematically illustrated by Fig. 5d, state variable "Pos error t(1)" is removed from position error history state variable set 410 because it corresponds to the oldest epoch and it is not locked. A new state variable "Pos error t(8)" is added. It represents an estimated error in a position of NSS receiver 10 at epoch t(8), which is now the newest epoch (the closest to the current epoch). State variables corresponding to epochs t(3) to t(7) remain in position error history state variable set 410.

At the next estimation epoch, as schematically illustrated by Fig. 5e, state variable "Pos error t(3)" is removed from position error history state variable set 410 because it corresponds to the oldest epoch and it is not locked. A new state variable "Pos error t(9)" is added. It represents an estimated error in a position of NSS receiver 10 at epoch t(9), which is now the newest epoch (the closest to the current epoch). State variables corresponding to epochs t(4) to t(8) remain in position error history state variable set 410. And so it goes on.

The embodiment illustrated by Figs. 5a to 5e, comprising, at each estimation epoch, removing, from position error history state variable set 410, the state variable that, among the state variables that are not locked, corresponds to the oldest epoch, is advantageous in that it allows the size of position error history state variable set 410 to be controlled. In other words, this avoids having a potentially very long state vector, which may result in a high computational burden.

In one embodiment, position error history state variable set 410 has a maximum size. In other words, the buffer, i.e. the memory, storing position error history state variable set 410 may have a maximum size. The maximum size may correspond to an expected latency of the precise position, i.e. the NSS-based position. The expected latency of the NSS-based position may for example be equal to any one of 3, 5, 10, 20, and 30 seconds, so that the position error history state variable set's 410 maximum size may also correspond to any one of these values (considering a given sampling rate). The maximum size may also be adapted to cover the expected latency of the NSS-based position at one point in time, if the expected latency changes over time as estimated for example based on the arrival time of the delayed NSS-based position and considering the estimated sampling rate (see also Fig. 14a).

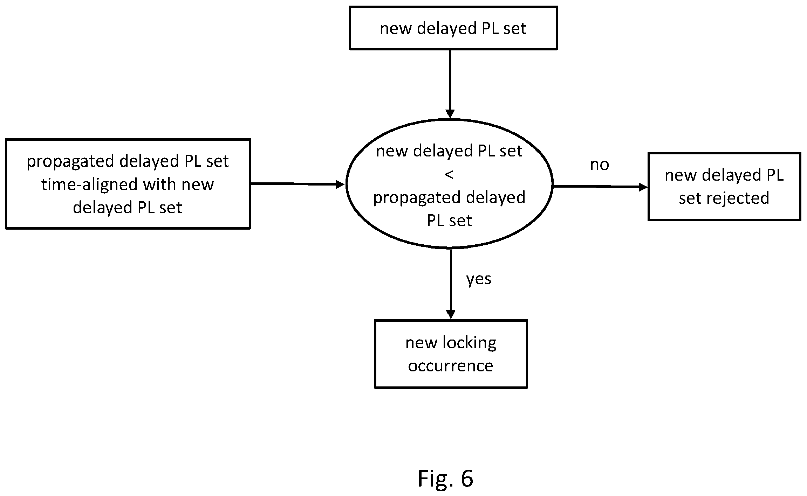

In some embodiments, a locking occurrence (i.e. locking, in position error history state variable set 410, the state variable or state variables corresponding to the epoch to which the delayed estimated position and associated delayed protection level set relate) takes place only in some instances when a new delayed estimated position and associated delayed protection level set become available. For example, as schematically illustrated in Fig. 6, if the new delayed protection level set is better than, i.e. smaller than, a propagated delayed protection level set (i.e., a corresponding protection level set computed based on a previously received delayed protection level set and a corrected delta protection level set derived from the estimated errors represented by position error history state variable set 410), a new locking occurrence takes place. Conversely, if the new delayed protection level set is larger than or equal to a propagated delayed protection level set, the new delayed protection level set may be rejected and the state variable corresponding to the propagated delayed protection level set remains locked. This process is particularly advantageous in terms of position availability, wherein the availability may be defined as the number of epochs the PL is below the application alert limit.

The acceptance or rejection of a new delayed protection level set is performed by respectively accepting all PLs of the delayed protection level set together or rejecting all PLs of the delayed protection level set together. However, the acceptance criterion may be based on one PL component (e.g. the horizontal PL or the vertical PL) or a combination of PL components. This will be described now in more detail.

In one embodiment, a new delayed protection level set is determined to be smaller than a corresponding propagated delayed protection level set if a horizontal component of the new delayed protection level set is smaller than a horizontal component of the corresponding propagated delayed protection level set.

In another embodiment, a new delayed protection level set is determined to be smaller than a corresponding propagated delayed protection level set if a vertical component of the new delayed protection level set is smaller than a vertical component of the corresponding propagated delayed protection level set.

In yet another embodiment, a new delayed protection level set is determined to be smaller than a corresponding propagated delayed protection level set if a combination of a horizontal component and vertical component of the new delayed protection level set is smaller than a corresponding combination of a horizontal component and vertical component of the corresponding propagated delayed protection level set.

Let's now provide an example in a possible implementation. Let's say that the current epoch is k5 and the delayed PL in use relates to epoch k2. The time-propagated PL at the current epoch (if the method is performed in real-time; otherwise, this can be a reference epoch) may be determined as the sum of the delayed PL at epoch k2 and the delta position PL (calculated, for example, in corrected-delta-position-(value-and-PL)-generator 80) from epoch k2 to epoch k5. Then, at epoch k6, a new delayed PL relating to epoch k4 is received. In order to decide whether this new delayed PL should replace the old one, the new delayed PL is compared against the PL computed (e.g., by corrected-delta-position-(value-and-PL)-generator 80) when the current time was epoch k4 (i.e., the sum of delayed PL at epoch k2 and delta position PL from epoch k2 to epoch k4). The new delayed PL is accepted if its value is smaller than the propagated PL at epoch k4. In that case, the PL at the current epoch k6 will be equal to the sum of the delayed PL at epoch k4 and the delta position PL from epoch k4 to epoch k6.

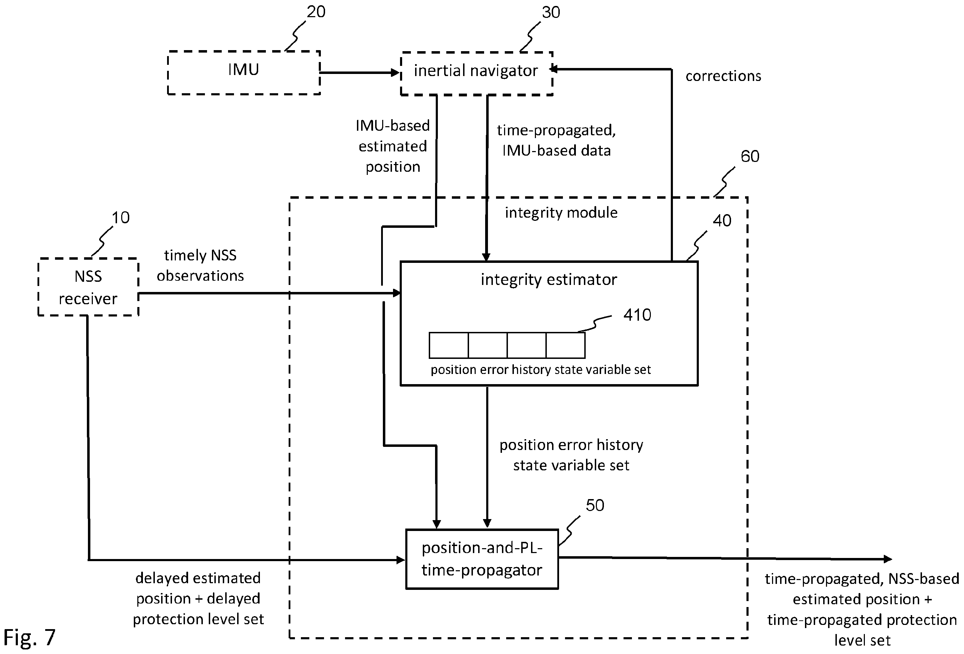

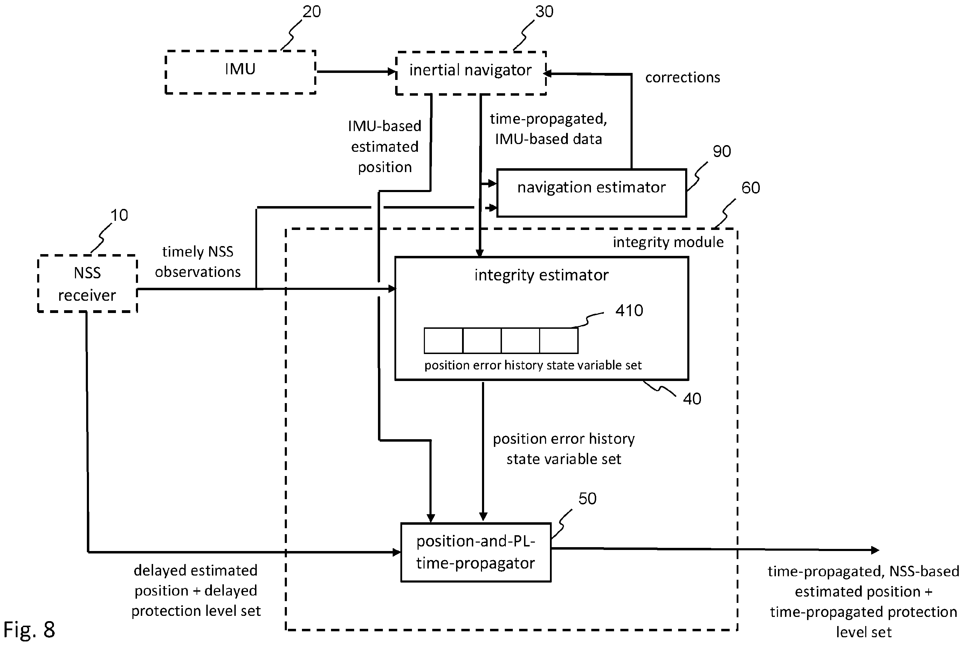

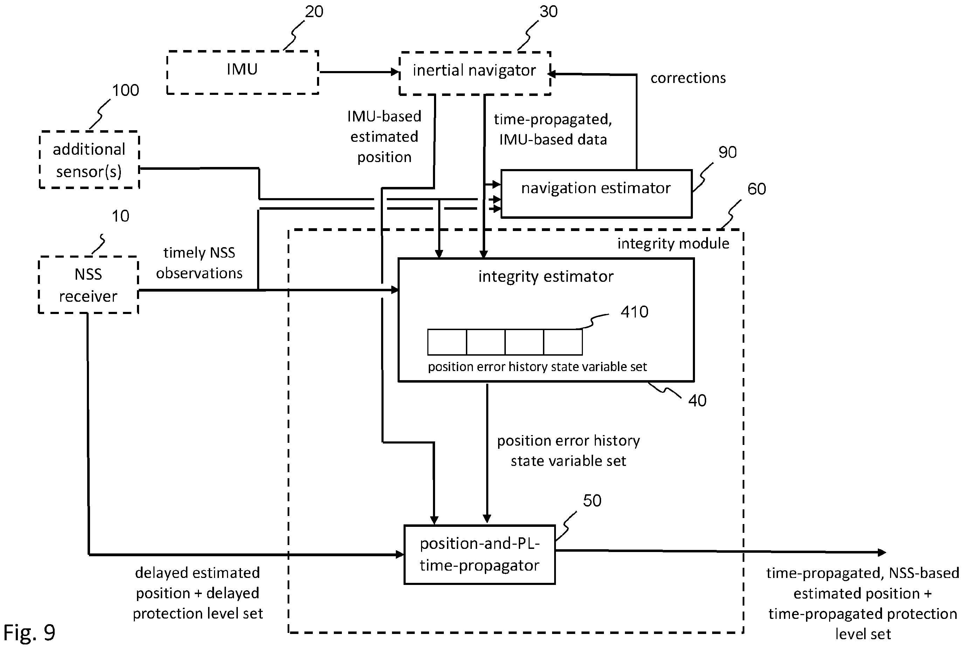

In one embodiment, the method further comprises operating a process, here referred to as "inertial navigator" 30. Inertial navigator 30 receives acceleration and angular velocity measurements from IMU 20, and propagates, in time (and typically at a high rate, such as for example 200 Hz), position, velocity and attitude data based on the acceleration and angular velocity measurements. In other words, the IMU data drives inertial navigator 30, meaning that inertial navigator 30 uses IMU data to propagate in time position, velocity (e.g., at the IMU center of navigation), and attitude. These quantities will generally drift over time as IMU errors accumulate (due to the integration of the IMU data). Other measurements such as the timely NSS observations and the optional data from additional sensor(s) (as described below with reference to Fig. 9) may be used by integrity estimator 40 (as described below with reference to Fig. 7) or by navigation estimator 90 (as described below with reference to Figs. 8 and 9) to compute corrections to inertial navigator's 30 propagated position, velocity and attitude. Inertial navigator 30 then provides the time-propagated position, velocity and attitude data to integrity estimator 40.

In one embodiment, as schematically illustrated by Fig. 7, inertial navigator 30 receives corrections (i.e., estimated errors including at least one of: position, velocity, attitude, and IMU errors) from integrity estimator 40. In such a case, integrity estimator 40 may for example operate together with inertial navigator 30 as a closed-loop AINS, as known in the art (see for example below section D, titled "Aided INS"; ref. [10], paragraphs [0086] to [0093]; and ref. [6], Section 14.1). Although the feedback loop, i.e. sending corrections from integrity estimator 40 to inertial navigator 30, is useful, this is not essential in particular if the method involves a high-quality IMU 20, such as for example a navigation-grade IMU. In other words, integrity estimator 40 may operate together with inertial navigator 30 in a closed-loop integration (i.e., with corrections sent from integrity estimator 40 to inertial navigator 30) or in an open-loop integration (i.e., without corrections sent from integrity estimator 40 to inertial navigator 30).

In one embodiment, as schematically illustrated by Fig. 8, the method further comprises operating a further estimation process 90, here referred to as "navigation estimator" 90, wherein navigation estimator 90 uses state variables and computes values of its state variables at least based on: the time-propagated, IMU-based data from inertial navigator 30, and the timely NSS observations made by NSS receiver 10. Furthermore, inertial navigator 30 receives corrections (i.e., estimated errors) from navigation estimator 90. Navigation estimator 90 involves or comprises, in one embodiment, a Kalman filter and/or a robust estimator. The invention is, however, not limited to the use of Kalman filter(s) and/or robust estimator(s). Other estimation processes, filters, or filter techniques may be used. Navigation estimator 90 may for example operate together with inertial navigator 30 as a closed-loop AINS, as described in below section D, titled "Aided INS"; in ref. [10], paragraphs [0086] to [0093]; or ref. [6], Section 14.1.

In one embodiment, as also schematically illustrated by Fig. 8, inertial navigator 30 receives corrections from navigation estimator 90 but does not receive corrections from integrity estimator 40. This enables integrity estimator 40 to operate as an independent multi-sensor delta position estimator prioritizing robustness over performance compared to navigation estimator 90 operating as a multi-sensor estimator prioritizing performance. Further, the idea is to detect and remove outliers beforehand and thus to generally guarantee that the resulting delta position probability distribution stays Gaussian all the time, as explained in section B.3 below. Namely, outliers are removed to prevent the multi-sensor delta positions to become biased, in which case the estimated delta position variance (used for PL propagation) would no longer reflect the actual error. The outliers can be detected and removed by analyzing the delta phase innovations and the innovations of measurements from additional sensors. Then, the delta position PL can be determined by scaling the delta position covariance matrix and used to propagate the delayed PL set to the current epoch (if the method is performed in real-time; otherwise, this can be a reference epoch). The two-estimator approach for multi-sensor PL computation has the advantage of keeping the overall system performance unchanged (compared to a system without integrity estimator 40; e.g., a system only with the navigation estimator 90) since position error states generated by integrity estimator 40 are independent from navigation estimator 90. In other words, the performance of navigation estimator 90 is not affected by the generation of position error states by integrity estimator 40, which is only used in this embodiment for propagating the PLs and it does not send any error corrections to inertial navigator 30 (that is the navigation estimator's 90 task).

In the two-estimator method schematically illustrated in Fig. 8, integrity estimator 40 receives time-propagated, IMU-based data from inertial navigator 30 (in a similar manner as described with reference to Fig. 1a). In the embodiment schematically illustrated by Fig. 8, transmitting the time-propagated, IMU-based data to integrity estimator 40 also serves to take into account the change in the operation of inertial navigator 30 due to the corrections transmitted from navigation estimator 90.

In one embodiment, the method may be so that integrity estimator 40 does not directly receive information from navigation estimator 90. In such a case, navigation estimator 90 may be only or primarily used for computing corrections for inertial navigator 30. Alternatively, integrity estimator 40 may directly receive information (e.g., error states) from navigation estimator 90.

In one embodiment, as schematically illustrated by Fig. 9, navigation estimator 90 computes values of its state variables further based on data from a further sensor 100 suitable for, or further sensors 100 together suitable for, estimating a change in position of NSS receiver 10. Further sensor(s) 100 is or comprise a distance measurement instrument (DMI), such as an odometer, vehicle motion constraints, and/or camera data.

In one embodiment, as also schematically illustrated by Fig. 9, integrity estimator 40 computes values of its state variables further based on data from a further sensor 100 suitable, or further sensors 100 together suitable, for estimating a change in position of NSS receiver 10, wherein, preferably, further sensor(s) 100 is or comprise a DMI, such as an odometer, vehicle motion constraints, and/or camera data.

The use of data from further sensor(s) 100 is advantageous in terms of availability of the position solution and of the PLs. For example, if a vehicle operating the method enters a tunnel, the timely NSS observations may no longer be available but the data from further sensor(s) 100 would still be available to contribute to the computation of the delta positions used for the propagation in time of delayed PLs.

As an alternative or in addition to the multi-sensor data from the further sensor(s) 100, the knowledge about motion constraints may also help during GNSS signal interruptions. For example, the rear axle lateral and vertical velocities of front-wheel steered vehicles are zero so that this information may be used in integrity estimator 40 (as a measurement update) to constrain the vehicle motion and therefore to also constrain the delta position variance so that the propagated PLs do not increase very fast. Constraining the delta positions improves their accuracy. If PLs are propagated with unconstrained delta positions, the PLs are propagated with larger delta position variances and thus may get closer to the alert limit faster.

In one embodiment, the method may be so that navigation estimator 90 and integrity estimator 40 use different input measurements, since navigation estimator 90 and integrity estimator 40 may be, at least to a certain extent, independent from each other. That is, navigation estimator 90 may compute values of its state variables further based on data from a first set of further sensor(s) 100 and integrity estimator 40 may compute values of its state variables further based on data from a second set of further sensor(s) 100, the first set being different or partially different from the second set. For example, each estimator may receive data from two different receivers and/or antennas. As another example, if data from a specific further sensor 100 is not considered to be entirely reliable, the data therefrom may be used in navigation estimator 90 but not in integrity estimator 40 so as to protect integrity estimator 40 from potential failures of further sensor 100.

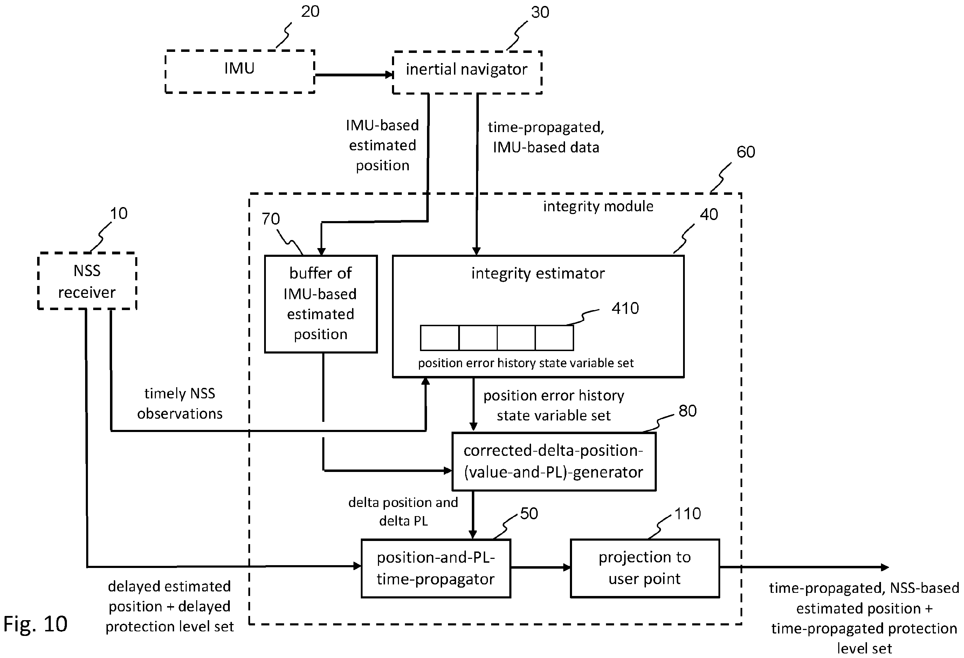

In one embodiment, the method further comprises projecting the generated time-propagated protection level set to another point, which is a point of a platform rigidly attached to NSS receiver 10. This operation may for example be performed by an element labelled as "projection to user point" 110 in Fig. 10.

In particular, knowledge about the NSS receiver's 10 attitude (which may form part of the time-propagated, IMU-based data from inertial navigator 30) allows projecting the time-propagated PLs from an APC of NSS receiver 10 to any point in a platform rigidly attached to NSS receiver 10. The projection may for example be implemented as described in section B.2 below.

In one embodiment, the method further comprises transferring the generated time-propagated protection level set to a position output of inertial navigator 30, i.e. a position output for which there is not necessarily any available PL. An advantage of doing so may be explained as follows: The inertial navigator 30's position may be corrected with corrections from navigation estimator 90. As mentioned before, navigator estimator 90 is configured for performance so that its corrections are more precise than the integrity estimator's 40 corrections. Therefore, the inertial navigator's 30 positions with corrections from navigator estimation 90 are more precise than the positions derived in integrity estimator 40 but less robust. Integrity estimator 40 can be more conservative when applying measurements, e.g., by doing delta-phase with longer anchors and by inflating measurement sigmas.

This transfer operation may for example be performed by an element which is here referred to "PL transfer" 120, as schematically illustrated by Fig. 11.

The transfer may for example be implemented as described in section B.4 below.

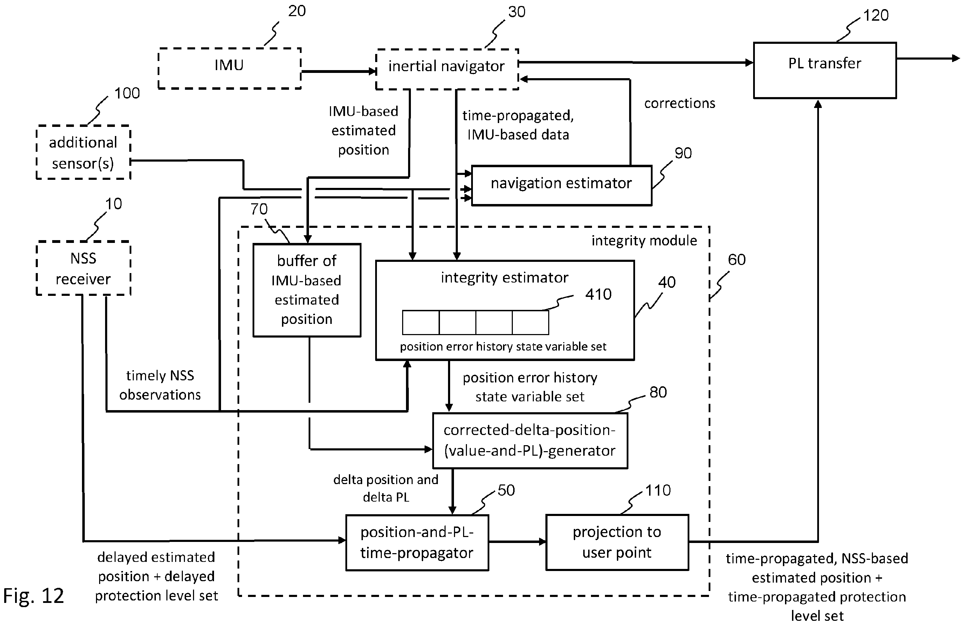

Fig. 12 is a schematic diagram of a method in one embodiment of the invention, which combines the embodiments illustrated with reference to Figs. 9 and 11. Thus, the above-described advantages may also be combined.

Before discussing further embodiments of the invention, let us now further briefly explain, in section A below, the context and some underlying considerations in which some embodiments of the invention have been developed, for a better understanding thereof.

A. Introduction to the context and some underlying considerations in which some embodiments of the invention have been developed

Traditional RAIM methods for determining GNSS PLs are well established for aviation applications (see also ref. [5], paragraphs [0083] to [0088]) but are typically not suitable for harsh environments due to their underlying assumptions (e.g., only a single fault per epoch, or high redundancy of measurements) (see also ref. [5], paragraphs [0094] and [0095]). Advances in autonomous applications have increased the demand for high GNSS position integrity. Ref. [5] relates to a technique for estimating GNSS PLs from the distribution of the ambiguity integer candidates, as discussed in the above "Background" section. The technique disclosed in ref. [5] has proved reliable while maximizing availability by keeping PLs low. However, the addition of an INS (and other multi-sensor data) is useful to bridge GNSS PL gaps during signal tracking interruptions. An INS also has the added benefit of making attitude available which allows PLs to be projected from an APC to any point in the NSS receiver's platform.

The main challenge when computing PLs for GNSS/INS integrated systems is to handle their low pass-filter nature. That is, a position offset may persist for a long time in the GNSS/INS integrated output position due to the correlations that build up between filter states.

With this in mind and given that GNSS PLs produced for example by the method of ref. [5] are subject to latency, the inventors have found that time-propagating to the current epoch the latent GNSS position PLs with multi-sensor is simpler than computing PLs directly from a conventional GNSS/INS tightly coupled system (i.e., with code and phase measurements) and still improves position availability. Treating GNSS and multi-sensor PL computation (almost) separately generally improves robustness since GNSS data are predominantly affected by high frequency noise which means that GNSS positions are less likely to build up long-term drifts.

In view of the considerations laid out in above section A, let us now describe further embodiments of the invention, together with considerations regarding how these embodiments may be implemented, for example, by software, hardware, firmware, or a combination of any of software, hardware, and firmware.

## B. Further embodiments

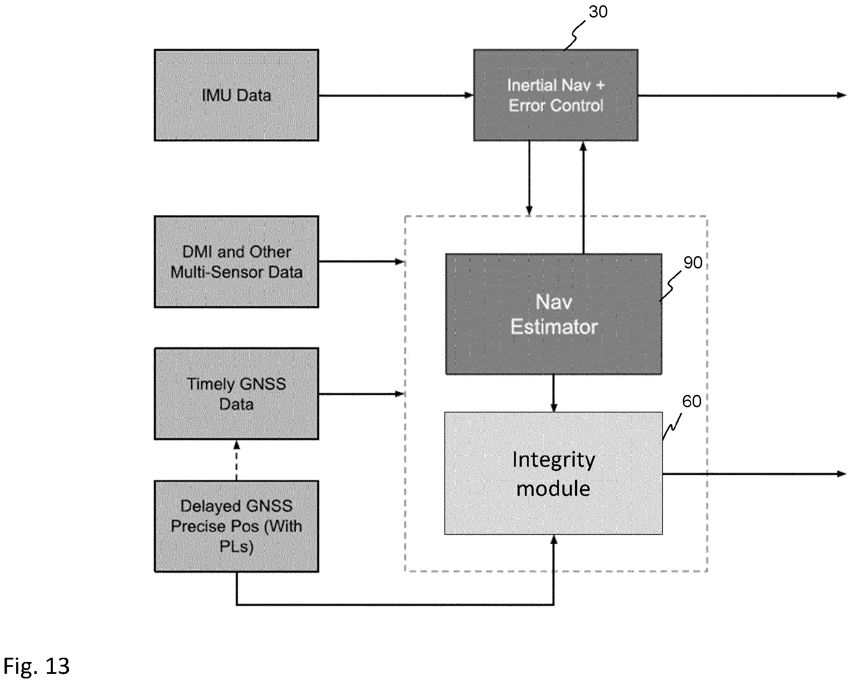

A two multi-sensor estimator architecture for PL computation according to an embodiment of the invention is schematically illustrated in Fig. 13. The two multi-sensor estimator architecture is used for delayed GNSS PL propagation. In Fig. 13, arrows connected to the dashed box around elements 60 and 90 mean that the information is received by both elements.

As in conventional GNSS/INS integrated systems, IMU data is used by an inertial navigator 30 to propagate position, velocity and attitude at a high rate. With this propagated information, time and measurement update models are generated at a lower rate (typically 1 Hz) and sent to both navigation estimator ("Nav Estimator") 90 and integrity module 60, which comprises integrity estimator 40 (not illustrated in Fig. 13). For the sake of simplicity, integrity estimator 40 and navigation estimator 90 may share the same navigation and IMU error state definition. That is, this may be more efficient in terms of implementation because in an exemplary closed-loop KF integration all corrections applied in inertial navigator 30 need to be subtracted from the KF state vector (from both navigation estimator 90 and integrity estimator 40). This expressed in Fig. 13, reference numeral 30, as "Error Control". Thus, if the integrity estimator's 40 KF does not have the same state definition as navigation estimator 90, the corrections applied to inertial navigator 30 cannot be directly subtracted from the integrity estimator's 40 KF state vector. As mentioned above, the corrections applied in inertial navigator 30 come from navigation estimator 90.

After all filter operations are finalized, inertial navigator state corrections are generated from the navigation estimator error states and transmitted to inertial navigator 30. To complete the integration loop, inertial navigator 30 sends the applied corrections back to the estimators which are then used for state control resets. Even though integrity estimator 40 does not provide any corrections, time and measurement models are generated from information provided by inertial navigator 30. This means that every time the inertial navigator navigation state gets corrected, this needs to be accounted for by shifting the integrity estimator states with applied corrections (in this case sent by navigation estimator 90). This expressed in Fig. 13, reference numeral 30, as "Error Control".

At every estimation epoch, error states (the above-discussed position error history state variable set 410) from integrity estimator 40 are used together with buffered inertial navigator information to compute delta positions to propagate the delayed GNSS PLs to the current epoch. The propagated PLs may then be projected to a user point and transferred to the high-rate output navigation solution.

## B.1 Delayed precise position PL propagation with multi-sensor delta positions

In the embodiment illustrated by Fig. 13, integrity module 60 does not interfere with the integration loop. Its purpose is to provide multi-sensor delta positions to propagate the delayed GNSS PLs to the current epoch and transfer them to the output GNSS/INS integrated position. This is done by augmenting the state vector with a set of previous position history states (those correspond to a form of the above-discussed position error history state variable set 410) that have a maximum time span equal to the expected precise position latency and are sampled at the expected precise position sampling rate (see Fig. 14a). At the end of every estimation step (i.e., after time and measurement updates) the oldest state is replaced by the most recent APC position error computed from the current INS errors.

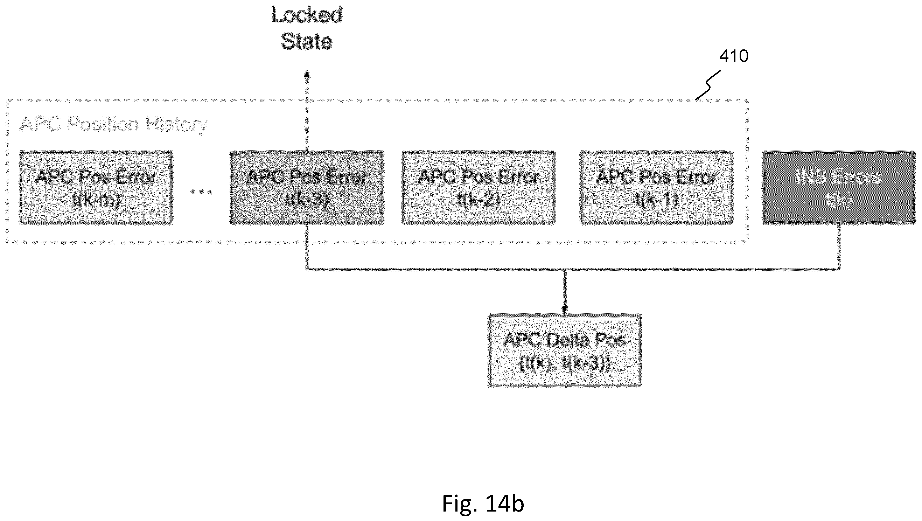

Further, every time a new delayed precise position becomes available, the correspondent APC position error history state is locked (i.e., it cannot be excluded even if it is the oldest state) and used to compute multi-sensor delta positions (see Fig. 14b). This state stays locked until a new delayed position is available.

Furthermore, the PLs from a new delayed precise position are always tested against their propagated counterparts, meaning that a new position is rejected if its PL is larger than the a priori PL computed with an older delayed precise position. This allows keeping PLs low in more challenging environments for GNSS signal tracking (e.g., highway overpasses).

The delta position from a history state to the current epoch at the APC may be computed as follows:

$$\Delta r_{(k)}^{g} = C_{e}^{g}\left(\hat{r}_{(k)}^{e} - \hat{r}_{(k-m)}^{e}\right) + H_{\Delta r(k)} x_{(k)} \qquad (1)$$

where:

- $\Delta r_{(k)}^{g}$ is the g-frame (NED) delta position at instant k;

- $C_{e}^{g}$ is the rotation matrix from e-frame (ECEF) to g-frame;

- $\hat{r}_{(k)}^{e}$ is the predicted e-frame position at instant k;

- $\hat{r}_{(k-m)}^{e}$ is the predicted e-frame position at instant k-m;

- $H_{\Delta r(k)}$ is the designed matrix used to compute corrections to the position difference; and

- $x_{(k)}$ is the integrity estimator's state vector.

The design matrix $H_{\Delta r(k)}$ is defined as:

$$H_{\Delta r(k)} = [H_{INS(k)} \quad H_{APC(k)}] \tag{2}$$

$$H_{APC(k)} = [0_{3\times a} \quad -I_{3\times 3} \quad 0_{3\times b}]$$

where $H_{INS(k)}$ is the design matrix that projects the INS position errors from IMU to APC, and $H_{APC(k)}$ is the design matrix that couples the previous history state correspondent to the delayed precise position into $\Delta r_{(k)}^{g}$. Note that the values of $a$ and $b$ depend on which history state is locked.

The delta position covariance matrix $P_{\Delta r(k-m,k)}$ may be calculated from the integrity estimator a posteriori covariance matrix $P_{(k)}$ using $H_{\Delta r(k)}$ from equation (2):

$$P_{\Delta r(k-m,k)} = H_{\Delta r(k)} P_{(k)} H_{\Delta r(k)}^{\mathrm{T}} \tag{3}$$

Assuming Gaussian distributed errors, the delta position PL can be retrieved by scaling $\sqrt{P_{\Delta r(k-m,k)}}$ with the standard normal distribution critical value for the required integrity risk (c):

$$PL_{\Delta r(k-m,k)} = c\sqrt{P_{\Delta r(k-m,k)}} \tag{4}$$

The propagated $HPL_{(k)}$ and $VPL_{(k)}$ at the APC may then be computed as:

$$HPL_{APC(k)} = HPL_{APC(k-m)} + HPL_{\Delta r(k-m,k)} \tag{5}$$

$$VPL_{APC(k)} = VPL_{APC(k-m)} + VPL_{\Delta r(k-m,k)}$$

where:

- $HPL_{APC(k-m)}$ and $VPL_{APC(k-m)}$ are the delayed APC HPL and VPL at epoch k-m, originating from the ambiguity resolution; and

- $HPL_{\Delta r(k-m,k)}$ and $VPL_{\Delta r(k-m,k)}$ are the horizontal and vertical components of $PL_{\Delta r(k-m,k)}$, respectively.

B.2 PL projection from APC to user point

As shown in section B.1, PLs are valid at the APC but can be projected to any point in the platform because INS attitude is available. The delta position covariance between two points only depends on attitude errors and the length of the lever arm. This can be realized when looking at the geometric difference between the position of two points $a$ and $b$ in an arbitrary frame y:

$$\Delta r_{ab}^y = r_a^y - r_b^y \tag{6}$$
$$= r_i^y + C_x^y l_{ia}^x - r_i^y - C_x^y l_{ib}^x$$
$$= C_x^y (l_{ia}^x - l_{ib}^x)$$
$$= C_x^y l_{ab}^x$$

where $i$ is a third point in the platform, $C_x^y$ is the rotation matrix from arbitrary frame $x$ to $y$, and $l_{ab}^x$ is the lever arm between points $a$ and $b$ resolved in the x-frame. Perturbing equation (6) (note: the term "perturbing" comes from "perturbation analysis" which is used to find approximate solutions of nonlinear equations) and assuming small-angle errors gives the following linear error equation:

$$\delta \Delta r_{ab}^y = \delta C_x^y l_{ab}^x \tag{7}$$
$$\approx -[\phi \times] \hat{C}_x^y l_{ab}^x$$

where:

- $\delta \Delta r_{ab}^y$ is the error in the delta position;
- $\delta C_x^y$ is the error in $C_x^y$;
- $\hat{C}_x^y$ is the predicted $C_x^y$; and
- $[\phi \times]$ is the skew symmetric form of vector $\phi$ with small-angle rotations.

From equation (7), the delta position covariance between points $a$ and $b$ can be determined as follows:

$$P_{\Delta r_{ab}} = \left[l_{ab}^y \times\right] P_\phi \left[l_{ab}^y \times\right]^{\mathrm{T}} \tag{8}$$

From equation (4), the PL of the distance between points $a$ and $b$ can be written as:

$$PL_{\Delta r_{ab}(k)} = c^2 P_{\Delta r_{ab}(k)} \tag{9}$$

The HPL and VPL at the user-point is determined by combining equations (7) and (9):

$$HPL_{USER(k)} = \sqrt{HPL^2_{APC(k)} + HPL^2_{\Delta r_{AU}(k)}}$$

$$VPL_{USER(k)} = \sqrt{VPL^2_{APC(k)} + VPL^2_{\Delta r_{AU}(k)}} \tag{10}$$

where $HPL_{\Delta r_{AU}(k)}$ and $VPL_{\Delta r_{AU}(k)}$ are the horizontal and vertical components, respectively, of $PL_{\Delta r_{AU}(k)}$, the PL of the distance between APC and user-point at epoch k.

B.3 Delta phase (i.e., time-differenced carrier phase) updates with longer anchors

In one embodiment, a component of the integrity estimation process is the measurement update with delta phase observations which allows keeping the INS aligned. As previously mentioned, the strategy employed in some embodiments of the invention is to guarantee that the delta position probability distribution stays Gaussian. Therefore, the delta phase observations used in integrity module 60 may have longer delta-phase intervals (typically larger than 5 seconds) to better detect and remove outliers due to phase drifts (the term "delta-phase interval" is as defined in ref. [22], p. 9 lines 23-24). Even though the delta-phase intervals used are longer, the delta phase measurement update rate is fixed at 1 Hz in order to keep delta position drifts low. This would not be possible if the measurement update rate matched the delta-phase interval mainly for low cost IMUs where errors build up quickly when no measurements are available.

The delta phase measurement model is constructed using the available previous position history states. This means that the delta-phase interval will vary depending on the sampling rate of the precise position (see Fig. 14a). For example, if the precise position is sampled at 0.5 Hz and the (minimum) delta-phase interval is set to 5 seconds, the time length covered by the delta phase observations will vary between 5 and 6 seconds for a measurement update rate of 1 Hz.

B.4 PL transfer to output position

In one embodiment, the user-point PL computed in integrity module 60 is transferred from the propagated position to the position output by inertial navigator 30. As described above, inertial navigator 30 may be corrected with navigation estimator's 90 states which are different from the states in integrity estimator 40 (see for example Fig. 8). Therefore, the difference between inertial navigator's 30 position and the integrity module's 60 propagated position may need to be added to equation (5).

The final PL computation at the user-point is:

$$HPL_{USER,Nav(k)} = HPL_{USER,Int(k)} + \left| C_e^g \left( r_{USER,Int}^e - r_{USER,Nav}^e \right) \right|_{horizontal} \qquad (11)$$

$$VPL_{USER,Nav(k)} = VPL_{USER,Int(k)} + \left| C_e^g \left( r_{USER,Int}^e - r_{USER,Nav}^e \right) \right|_{vertical}$$

where:

- $r_{USER,Int}^e$ is the user-point position propagated in integrity module 60; and

- $r_{USER,Nav}^e$ is the output user-point position reported by inertial navigator's 30 (at the full integer second).

C. Inertial Navigation System

An inertial navigation system (INS) is a navigation instrument that computes its navigation solution by propagating Newton's equations of motion using as inputs measured specific forces or incremental velocities from a triad of accelerometers and measured angular rates or incremental angles from a triad of gyros. A terrestrial INS is designed to navigate on the earth where it is subjected to gravity and earth rate. A celestial INS is designed to navigate in space where it is subjected to smaller gravitational forces from multiple celestial bodies. The present disclosure is concerned only with a terrestrial INS. The qualifier "terrestrial" is hereafter implied but not cited explicitly.

An INS can navigate with a specified accuracy after an initialization of the inertial navigator mechanization during which it determines its initial position, initial velocity and initial attitude or initial orientation. The term "alignment" is used to describe this initialization and any ongoing corrections of the inertial navigator mechanization. A free-inertial INS performs an initial alignment and then propagates its navigation solution with no further corrections. See ref. [11] for an overview of an INS. See ref. [12], [14], [15] for descriptions of inertial navigator equations and algorithms.

D. Aided INS

An aided INS (AINS) undergoes ongoing corrections to its inertial navigator mechanization to constrain the growth in inertial navigation errors. The AINS uses an error estimator to estimate INS errors and some means of INS error control to correct the INS errors. A so-called "closed-loop AINS" uses the estimated INS errors from the error estimator to correct the inertial navigator mechanization integrators. This causes the INS alignment to be continuously corrected, and as such is a method for achieving mobile alignment.

Fig. 5 of ref. [10] shows a generic closed-loop AINS architecture. The inertial measurement unit (IMU) 1 (in Fig. 5 of ref. [10]) generates incremental velocities and incremental angles at the IMU sampling rate, typically 50 to 500 samples per second. The corresponding IMU sampling time interval is the inverse of the IMU sampling rate, typically 1/50 to 1/500 seconds. The incremental velocities are the specific forces from the IMU accelerometers integrated over the IMU sampling time interval. The incremental angles are the angular rates from the IMU gyros integrated over the IMU sampling time interval. See ref. [12] for information on inertial sensors and IMU mechanizations. The inertial navigator 2 (in Fig. 5 of ref. [10]) receives the inertial data from the IMU and computes the current IMU position (typically latitude, longitude, altitude), velocity (typically North, East and Down components) and orientation (roll, pitch and heading) at the IMU sampling rate.

The aiding sensors 5 (in Fig. 5 of ref. [10]) are any sensors that provide navigation information that is statistically independent of the inertial navigation solution that the INS generates. A GNSS receiver is a widely used aiding sensor.

The error estimator 4 (in Fig. 5 of ref. [10]) is one of several possible estimation algorithms that compute an estimate of a state vector based on constructed measurements. The error estimator is typically a Kalman filter (see ref. [13]), however it can be one of several other types of multivariable estimators that include an unscented Kalman filter (see ref. [16], [17]), a particle filter (see ref. [18]), or an M-estimator (of which a least-squares adjustment is a special case; see ref. [19] as an example). The measurements typically comprise computed differences between the inertial navigation solution elements and corresponding data elements from the aiding sensors. For example, an inertial-GNSS position measurement comprises the differences in the latitudes, longitudes and altitudes respectively computed by the inertial navigator and a GNSS receiver. The true positions cancel in the differences, so that the differences in the position errors remain. An error estimator designed for integration of an INS and aiding sensors typically estimates the errors in the INS and aiding sensors. The INS errors typically comprise the following:

- Inertial North, East and Down position errors
- Inertial North, East and Down velocity errors
- Inertial platform misalignment errors
- Accelerometer biases
- Gyro biases

GNSS errors may include the following:

- Receiver clock offset and drift
- Carrier phase ambiguities
- Atmospheric range errors
- Multipath errors
- Antenna phase center (APC) errors

Ref. [13] provides a relatively comprehensive treatment of Kalman filtering. It also contains the AINS as an example application. Ref. [14] provides a detailed analysis of different INS error models that may be used in an AINS Kalman filter.

The error controller 3 (in Fig. 5 of ref. [10]) computes a vector of resets from the INS error estimates generated by the error estimator and applies these to the inertial navigator integration processes, thereby regulating the inertial navigator errors in a closed-loop error control loop. This causes the inertial navigator errors to be continuously regulated and hence maintained at significantly smaller magnitudes than an uncontrolled or free-inertial navigator would be capable of.

The technology of aided inertial navigation originated in the late 1960s and found application within military navigation systems. Since then, much research has been conducted and much literature has been generated on the subject. An example of a book on the subject is ref. [11], The equivalent of Fig. 10 is shown in Figure 6-2 in ref. [11], p. 273. See also ref. [14] for a relatively comprehensive treatment of the mathematics of AINS.

System

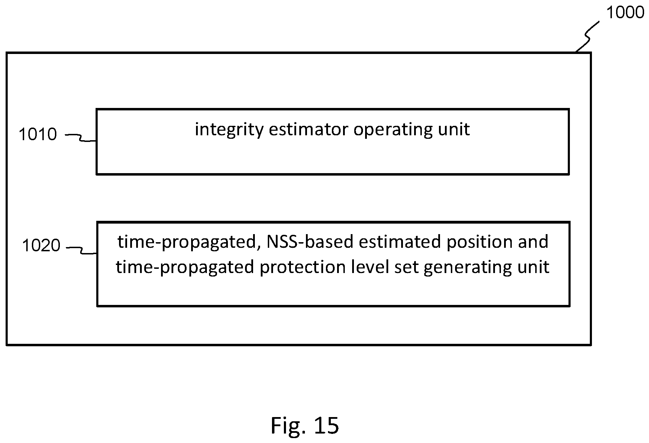

Fig. 15 schematically illustrates a system 1000 in one embodiment of the invention. System 1000 comprises an NSS receiver (not illustrated in Fig. 15) and/or a processing entity (not illustrated in Fig. 15) capable of receiving data from the NSS receiver. System 1000 operates to estimate a position and generating at least one PL associated with the estimated position. As mentioned above, a PL is a statistical error bound ensuring that the estimated position only exceeds the PL with a probability, here referred to as "integrity risk". System 1000 comprises a first unit 1010, here referred to as "integrity estimator operating unit" 1010, and second unit 1020, here referred to as "time-propagated, NSS-based estimated position and time-propagated protection level set generating unit" 1020.

Integrity estimator operating unit 1010 is configured for operating an estimation process, here referred to as "integrity estimator" 40, as described above. Namely, integrity estimator 40 uses state variables and computes values of its state variables at least based on: (i) data, here referred to as "time-propagated, IMU-based data", derived from data from an IMU 20 suitable for estimating a change in position of NSS receiver 10, and (ii) timely NSS observations made by NSS receiver 10. Integrity estimator 40 uses, among other state variables, a plurality of state variables 410, here referred to as "position error history state variable set" 410, representing estimated errors in a position of NSS receiver 10 at a plurality of epochs preceding an estimation epoch.

Furthermore, time-propagated, NSS-based estimated position and time-propagated protection level set generating unit 1020 is configured for generating, for the estimation epoch, an estimated position, here referred to as "time-propagated, NSS-based estimated position", of NSS receiver 10 and at least one protection level, here referred to as "time-propagated protection level set", associated with the time-propagated, NSS-based estimated position, at least based on: (a) position error history state variable set 410; (b) an estimated position, here referred to as the "IMU-based estimated position", of NSS receiver 10 computed based on data from IMU 20; (c) a delayed estimated position that is applicable to an epoch preceding the estimation epoch and that has been computed based on NSS observations made by NSS receiver 10; and (d) at least one delayed protection level, here referred to as "delayed protection level set", associated with the delayed estimated position.

In one embodiment, a vehicle comprises a system 1000 as described above. The vehicle may for example be an autonomous vehicle such as a self-driving vehicle, a driverless vehicle, a robotic vehicle, a highly automated vehicle, a partially automated vehicle, an aircraft, or an unmanned aerial vehicle. Alternatively or additionally, the vehicle may for example be at least one of (the list of possibilities is not meant to be exhaustive): a motor vehicle, a car, a truck, a bus, a train, a motorcycle, a tractor, an agricultural equipment, an agricultural tractor, a combine harvester, a crop sprayer, a forestry equipment, a construction equipment, a grader, and a train. Exemplary applications may include machine guidance, construction work, operation of unmanned aerial vehicles (UAV), also known as drones, and operation of unmanned surface vehicles/vessels (USV).

Additional remarks

Any of the above-described methods and their embodiments may be implemented, at least partially, by means of a computer program or a set of computer programs. The computer program(s) may be loaded on an apparatus, such as for example an NSS receiver (running on a rover station, on a moving reference station, or within a vehicle) or a server (which may comprise one or a plurality of computers). Therefore, the invention also relates, in some embodiments and/or aspects, to a computer program or set of computer programs, which, when carried out on an apparatus as described above, such as for example an NSS receiver (running on a rover station, on a moving reference station, or within a vehicle) or a server, carries out any one of the above-described methods and their embodiments.

The invention also relates, in some embodiments, to a computer-readable medium or a computer-program product including the above-mentioned computer program. The computer-readable medium or computer-program product may for instance be a magnetic tape, an optical memory disk, a magnetic disk, a magnetooptical disk, an SSD, a CD-ROM, a DVD, a CD, a flash memory unit, or the like, wherein the computer program is permanently or temporarily stored. In some embodiments, a computer-readable medium (or to a computer-program product) has computer-executable instructions for carrying out any one of the methods of the invention.

In one embodiment, a computer program as claimed may be delivered to the field as a computer program product, for example through a firmware or software update to be installed on receivers already in the field. This applies to each of the above-described methods and apparatuses.

As mentioned above, a NSS receiver comprises one or more antennas configured to receive NSS signals at the frequencies broadcasted by the NSS satellites, and a NSS receiver may further comprise processor units, one or a plurality of accurate clocks (such as crystal oscillators), one or a plurality of central processing units (CPU), one or a plurality of memory units (RAM, ROM, flash memory, or the like), and a display for displaying position information to a user.

Where the terms "integrity estimator operating unit", "time-propagated, NSS-based estimated position and time-propagated protection level set generating unit", and the like are used herein as units (or sub-units) of an apparatus (such as an NSS receiver), no restriction is made regarding how distributed the constituent parts of a unit (or sub-unit) may be. That is, the constituent parts of a unit (or sub-unit) may be distributed in different software, firmware, or hardware components or devices for bringing about the intended function. Further, the units may be gathered together for performing their functions by means of a combined, single unit (or sub-unit).

For example, in one embodiment, navigation estimator 90, integrity estimator 40, and position-and-PL-time-propagator 50 are implemented using a single piece of software, a single piece of hardware, and/or as a single piece of firmware. In another embodiment, NSS receiver 10, navigation estimator 90, integrity estimator 40, and position-and-PL-time-propagator 50 are implemented using a single piece of software, a single piece of hardware, and/or as a single piece of firmware.

The above-mentioned units and sub-units may be implemented using hardware, software, firmware, any combination of hardware, software, and firmware, pre-programmed ASICs (application-specific integrated circuits), etc. A unit may include a central processing unit (CPU), a storage unit, input/output (I/O) units, network connection devices, etc.

Although the present invention has been described on the basis of detailed examples, the detailed examples only serve to provide the skilled person with a better understanding and are not intended to limit the scope of the invention. The scope of the invention is defined by the appended claims.

Abbreviations:

| | | |
|---|---|---|
| AINS | aided inertial navigation system | |
| APC | antenna phase center | |
| ASIC | application-specific integrated circuit | |
| BDS | BeiDou Navigation Satellite System | |
| C/A | coarse/acquisition (code) | |
| CD | compact disc | |
| CD-ROM | compact disk read-only memory | |
| CPU | central processing unit | |
| DMI | distance measurement instrument | |
| DVD | digital versatile disc | |
| ECEF | Earth-centered, Earth-fixed coordinate system | |
| GNSS | global navigation satellite system | |
| GPS | Global Positioning System | |
| HPL | horizontal protection level | |
| I/O | input/output | |
| IMU | inertial measurement unit | |
| INS | inertial navigation system | |
| IP | Internet Protocol | |
| KF | Kalman filter | |
| NAVIC | NAVigation with Indian Constellation | |
| NED | North, east, down (axial system) | |
| NSS | navigation satellite system | |
| PL | protection level | |
| PRN | pseudo-random noise | |
| QZSS | Quasi-Zenith Satellite System | |
| RAIM | Receiver autonomous integrity monitoring | |
| RAM | random-access memory | |
| ref. | reference (or references) | |
| RNSS | regional navigation satellite system | |
| ROM | read-only memory | |
| SSD | solid-state disk | |
| UAV | unmanned aerial vehicle | |
| VPL | vertical protection level | |

References:

[1] Hofmann-Wellenhof, B., et al., "GNSS, Global Navigation Satellite Systems, GPS, GLONASS, Galileo, & more", Springer-Verlag Wien, 2008.

[2] Wu, S. et al. 2008. Geometry Extra-Redundant Almost Fixed Solutions: A High Integrity Approach for Carrier Phase Ambiguity Resolution for High Accuracy Relative Navigation, Position, Location and Navigation Symposium, 2008, Monterey, California, 3 September. IEEE/ION.

[3] Khanafseh, S. & Pervan, B. 2010, A New Approach for Calculating Position Domain Integrity Risk for Cycle Resolution in Carrier Phase Navigation Systems, IEEE Transactions on Aerospace and Electronic Systems, Vol. 46, No. 1, January, pp. 296-307.

[4] Khanafseh, S. et al. 2012, Integrity risk of cycle resolution in the presence of bounded faults, Proceedings of the 2012 IEEE / ION Position Location and Navigation Symposium, 23 April, Monterey, CA.

[5] EP 3 792 665 A1 titled "Protection level generation methods and systems for applications using navigation satellite system (NSS) observations" (Trimble ref.: 19019-EP)

[6] Groves, Paul D. (2008), "Principles of GNSS, Inertial, and Multisensor Integrated Navigation Systems", Artech House, ISBN 978-1-58053-255-6.

[7] Jan Van Sickle, "Two Types of Observables | GEOG 862: GPS and GNSS for Geospatial Professionals", John A. Dutton e-Education Institute, College of Earth and Mineral Sciences, The Pennsylvania State University, retrieved from https://www.e-education.psu.edu/geog862/node/1752 on November 8, 2021.

[8] EP 3 035 080 A1 titled "Navigation satellite system positioning involving the generation of correction information" (Trimble ref.: A4396).

[9] EP 3 130 943 A1 titled "Navigation satellite system positioning involving the generation of tropospheric correction information" (Trimble ref.: 15072-EPO).

[10] EP 3 293 549 A1 titled "Advanced navigation satellite system positioning method and system using delayed precise information" (Trimble ref.: 16029-EPO).

[11] George Siouris, "Aerospace Avionics Systems, A Modern Synthesis", Academic Press 1993.

[12] A. Lawrence, "Modern Inertial Technology, Navigation Guidance and Control", Second Edition, Springer 1998.

[13] R.G. Brown and P.Y.C. Hwang, "Introduction to Random Signals and Applied Kalman Filtering", 3rd Edition, John Wiley & Sons 1997.

[14] R.M. Rogers, "Applied Mathematics in Integrated Navigation Systems", AIAA Education Series 2000.

[15] P.G. Savage, "Strapdown Analytics, Parts 1 and 2", Strapdown Associates, 2000

[16] S. J. Julier and J. K. Uhlmann, "A New Extension of the Kalman Filter to Nonlinear Systems". Proceedings of AeroSense: The 11th Int. Symp. On Aerospace/Defence Sensing, Simulation and Controls, 1997.

[17] Wan, E.A.; Van Der Merwe, R., "The unscented Kalman filter for nonlinear estimation", Proceedings of the IEEE 2000 Adaptive Systems for Signal Processing, Communications, and Control Symposium.

[18] Arulampalam, M.S., Maskell, S., Gordon, N. & Clapp, T. (2002), "A tutorial on particle filters for online nonlinear/non-gaussian Bayesian tracking". IEEE Transactions on Signal Processing. 50(2):174-188.

[19] Huber, Peter J. (2009). "Robust Statistics (2nd ed.)". Hoboken, NJ: John Wiley & Sons Inc.

[20] WO 2012/151006 A1 (application number: PCT/US2012/029694) titled "GNSS Signal Processing with Delta Phase" (Trimble ref.: TNL A-2705PCT).

[21] WO 2010/021660 A2 (application number: PCT/US2009/004476) titled "GNSS Signal Processing Methods and Apparatus with Candidate Set Selection" (Trimble ref.: A2339)

[22] Co-pending European patent application EP 22 206 935.3 filed on November 11, 2022, and titled "Methods and systems for forming time-differenced navigation satellite system observables" (Trimble ref.: 22038-EP)

## Claims

1. Method, carried out by at least one of a navigation satellite system receiver (10), hereinafter abbreviated as "NSS receiver" (10), and a processing entity capable of receiving data from the NSS receiver (10), for estimating a position and generating at least one protection level associated with the estimated position, wherein a protection level is a statistical error bound ensuring that the estimated position only exceeds the protection level with a probability, hereinafter referred to as "integrity risk", the method comprising:

   operating (s10) an estimation process (40), hereinafter referred to as "integrity estimator" (40), wherein the integrity estimator (40) uses state variables and computes values of its state variables at least based on:

      data, hereinafter referred to as "time-propagated, IMU-based data", derived from data from an inertial measurement unit (20) suitable for estimating a change in position of the NSS receiver (10), and
      timely NSS observations made by the NSS receiver (10),

   wherein the integrity estimator (40) uses, among other state variables, a plurality of state variables (410), hereinafter referred to as "position error history state variable set" (410), representing estimated errors in a position of the NSS receiver (10) at a plurality of epochs preceding an estimation epoch; and
   generating (s20), for the estimation epoch, an estimated position, hereinafter referred to as "time-propagated, NSS-based estimated position", of the NSS receiver (10) and at least one protection level, hereinafter referred to as "time-propagated protection level set", associated with the time-propagated, NSS-based estimated position, at least based on:

      the position error history state variable set (410);
      an estimated position, hereinafter referred to as the "IMU-based estimated position", of the NSS receiver (10) computed based on data from the inertial measurement unit (20);
      a delayed estimated position that is applicable to an epoch preceding the estimation epoch and that has been computed based on NSS observations made by the NSS receiver (10); and
      at least one delayed protection level, hereinafter referred to as "delayed protection level set", associated with the delayed estimated position.

2. Method of claim 1, further comprising buffering the IMU-based estimated position prior to using it in generating (s20) the time-propagated, NSS-based estimated position and the time-propagated protection level set.

3. Method of claim 1 or 2, wherein generating (s20) the time-propagated, NSS-based estimated position and the time-propagated protection level set comprises:

generating a corrected change in position, hereinafter referred to as "corrected delta position", and at least one corrected change in protection level, hereinafter referred to as "corrected delta protection level set", based on

the position error history state variable set (410);
the IMU-based estimated position; and

generating the time-propagated, NSS-based estimated position and the time-propagated protection level set based on:

the corrected delta position;
the corrected delta protection level set;
the delayed estimated position; and
the delayed protection level set.

4. Method according to any one of the preceding claims, further comprising:

each time a delayed estimated position and associated delayed protection level set become available, or at least at some instances when a delayed estimated position and associated delayed protection level set become available, locking, in the position error history state variable set (410), the state variable or state variables corresponding to the epoch to which the delayed estimated position and associated delayed protection level set relate,
wherein locking, in the position error history state variable set (410), a state variable means that the state variable remains in the position error history state variable set (410) until a condition is met, in which case the state variable is unlocked.

5. Method of claim 4, wherein the condition is met when a new delayed estimated position and associated delayed protection level set become available.

6. Method of claim 4 or 5, wherein, at each estimation epoch, the state variable of the position error history state variable set (410) that, among the state variables that are not locked, corresponds to the oldest epoch is removed from the position error history state variable set (410).

7. Method according to any one of claims 4 to 6, wherein determining whether the delayed estimated position and associated delayed protection level set becoming available shall trigger a locking occurrence comprises determining whether the new delayed protection level set is smaller than a corresponding protection level set propagated based on a previously received delayed protection level set and estimated errors represented by the position error history state variable set (410).

8. Method of claim 7, wherein one of the following applies:

the new delayed protection level set is determined to be smaller than a corresponding propagated delayed protection level set if a horizontal component of the new delayed protection level set is smaller than a horizontal component of the corresponding propagated delayed protection level set;
the new delayed protection level set is determined to be smaller than a corresponding propagated delayed protection level set if a vertical component of the new delayed protection level set is smaller than a vertical component of the corresponding propagated delayed protection level set; and
the new delayed protection level set is determined to be smaller than a corresponding propagated delayed protection level set if a combination of a horizontal component and vertical component of the new delayed protection level set is smaller than a corresponding combination of a horizontal component and vertical component of the corresponding propagated delayed protection level set.

9. Method according to any one of the preceding claims, further comprising

operating a process, hereinafter referred to as "inertial navigator" (30), receiving acceleration and angular velocity measurements from the inertial measurement unit (20) and time-propagating position, velocity and attitude data based on the acceleration and angular velocity measurements, wherein the time-propagated position, velocity and attitude data are provided to the integrity estimator (40).

10. Method of claim 9, wherein the inertial navigator (30) receives corrections from the integrity estimator (40).

11. Method of claim 9, further comprising
operating a further estimation process (90), hereinafter referred to as "navigation estimator" (90), wherein the navigation estimator (90) uses state variables and computes values of its state variables at least based on:

> the time-propagated, IMU-based data, and
> the timely NSS observations made by the NSS receiver (10); and

wherein the inertial navigator (30) receives corrections from the navigation estimator (90).

12. Method of claim 11, wherein the inertial navigator (30) does not receive corrections from the integrity estimator (40).

13. Method of claim 11 or 12, wherein the navigation estimator (90) is at least one of: a Kalman filter and a robust estimator.

14. Method according to any one of claims 11 to 13, wherein the navigation estimator (90) computes values of its state variables further based on
data from a further sensor suitable, or further sensors together suitable, for estimating a change in position of the NSS receiver (10), wherein, preferably, the further sensor or sensors is or comprise a distance measurement instrument.

15. Method according to any one of the preceding claims, wherein the integrity estimator (40) computes values of its state variables further based on
data from a further sensor suitable, or further sensors together suitable, for estimating a change in position of the NSS receiver (10), wherein, preferably, the further sensor or sensors is or comprise a distance measurement instrument.

16. Method according to any one of the preceding claims, further comprising:
projecting the generated time-propagated protection level set to another point, which is a point of a platform rigidly attached to the NSS receiver (10).

17. Method according to any one of claims 9 to 14, further comprising:
transferring the generated time-propagated protection level set to a position output of the inertial navigator (30).

18. Method according to any one of the preceding claims, wherein the position error history state variable set (410) has a maximum size.

19. Method according to any one of the preceding claims, wherein the integrity estimator (40) is at least one of: a Kalman filter and a robust estimator.

20. Method according to any one of the preceding claims, wherein the delayed protection level set comprises a horizontal component and a vertical component.

21. System (1000) comprising at least one of a navigation satellite system receiver (10), hereinafter abbreviated as "NSS receiver" (10), and a processing entity capable of receiving data from the NSS receiver (10), for estimating a position and generating at least one protection level associated with the estimated position, wherein a protection level is a statistical error bound ensuring that the estimated position only exceeds the protection level with a probability, hereinafter referred to as "integrity risk", the system (1000) being configured for:

> operating an estimation process, hereinafter referred to as "integrity estimator" (40), wherein the integrity estimator (40) uses state variables and computes values of its state variables at least based on:

>> data, hereinafter referred to as "time-propagated, IMU-based data", derived from data from an inertial measurement unit (20) suitable for estimating a change in position of the NSS receiver (10), and
>> timely NSS observations made by the NSS receiver (10),

wherein the integrity estimator (40) uses, among other state variables, a plurality of state variables (410), hereinafter referred to as "position error history state variable set" (410), representing estimated errors in a position of the NSS receiver (10) at a plurality of epochs preceding an estimation epoch; and

generating, for the estimation epoch, an estimated position, hereinafter referred to as "time-propagated, NSS-based estimated position", of the NSS receiver (10) and at least one protection level, hereinafter referred to as "time-propagated protection level set", associated with the time-propagated, NSS-based estimated position, at least based on:

> the position error history state variable set (410);
> an estimated position, hereinafter referred to as the "IMU-based estimated position", of the NSS receiver (10) computed based on data from the inertial measurement unit (20);
> a delayed estimated position that is applicable to an epoch preceding the estimation epoch and that has been computed based on NSS observations made by the NSS receiver (10); and
> at least one delayed protection level, hereinafter referred to as "delayed protection level set", associated with the delayed estimated position.

22. Vehicle comprising a system (1000) according to claim 21, the vehicle preferably being at least one of: a motor vehicle, an agricultural equipment, an agricultural tractor, a combine harvester, a crop sprayer, a forestry equipment, a construction equipment, a truck, a bus, a train, a motorcycle, an autonomous vehicle, a self-driving vehicle, a driverless vehicle, a robotic vehicle, a highly automated vehicle, an aircraft, and an unmanned aerial vehicle.

23. Computer program or set of computer programs comprising computer-readable instructions configured, when executed on a computer or set of computers, to cause the computer or set of computers to carry out the method according to any one of claims 1 to 20.

24. Computer program product or storage mediums comprising a computer program or set of computer programs according to claim 23.

**Fig. 1a**

**Fig. 1b**

30 — inertial navigator

20 — IMU

10 — NSS receiver

60 — integrity module

40 — integrity estimator

410 — position error history state variable set

50 — position-and-PL-time-propagator

time-propagated, IMU-based data

IMU-based estimated position

timely NSS observations

position error history state variable set

delayed estimated position + delayed protection level set

time-propagated, NSS-based estimated position + time-propagated protection level set

Fig. 2

Fig. 3

Fig. 4

EP 4 556 957 A1

position error history state variable set

410

Fig. 5a

| Pos error t(0) | Pos error t(1) × | Pos error t(2) | Pos error t(3) | Pos error t(4) | Pos error t(5) |

Fig. 5b

| t(1) × | t(2) | t(3) | t(4) | t(5) | t(6) |

Fig. 5c

| t(1) × | t(3) | t(4) | t(5) | t(6) | t(7) |

new delayed precise position and PL

Fig. 5d

| t(3) | t(4) | t(5) × | t(6) | t(7) | t(8) |

Fig. 5e

| t(4) | t(5) × | t(6) | t(7) | t(8) | t(9) |

× : locked state

Fig. 6

inertial navigator 30

corrections

IMU 20

IMU-based estimated position

time-propagated, IMU-based data

integrity module 60

40 integrity estimator

410 position error history state variable set

position error history state variable set

NSS receiver 10

timely NSS observations

50 position-and-PL-time-propagator

delayed estimated position + delayed protection level set

time-propagated, NSS-based estimated position + time-propagated protection level set

Fig. 7

Fig. 8

Fig. 9

Fig. 10

Fig. 11

Fig. 12

EP 4 556 957 A1

Fig. 13

Fig. 14a

EP 4 556 957 A1

Fig. 14b

1000

1010 — integrity estimator operating unit

1020 — time-propagated, NSS-based estimated position and time-propagated protection level set generating unit

Fig. 15

| | Europäisches Patentamt<br>European Patent Office<br>Office européen des brevets | **EUROPEAN SEARCH REPORT** | **Application Number**<br>**EP 23 21 0075** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GROSCH A ET AL: "Parameter Study of Loosely Coupled INS/GNSS Integrity Performance", POSITION LOCATION AND NAVIGATION SYMPOSIUM (PLANS), 2012 IEEE/ION, IEEE, US, 12 July 2012 (2012-07-12), pages 230-238, XP056003766, DOI: 10.1109/PLANS.2012.6236885 ISBN: 978-1-4673-0387-3 | 1-3,9-24 | INV.<br>G01S19/20<br>G01S19/49 |
| A | * abstract *<br>* chapter "I. Introduction" *<br>* chapter "V. Integrity Performance with GNSS" * | 4-8 | |
| X | US 2022/365224 A1 (ROSE ROBERT W [US] ET AL) 17 November 2022 (2022-11-17) | 1-3,9-24 | |
| A | * abstract *<br>* figures 1A, 1B, 1C *<br>* figures 2-5 *<br>* paragraphs [0004] – [0006] *<br>* paragraphs [0017] – [0022] *<br>* paragraphs [0043] – [0049] *<br>* paragraphs [0060] – [0065] *<br>* paragraph [0078] *<br>* paragraphs [0082] – [0086] *<br>* paragraph [0089] * | 4-8 | |
| X | WO 2023/180143 A1 (THALES SA [FR]) 28 September 2023 (2023-09-28) | 1-3,9-24 | TECHNICAL FIELDS SEARCHED (IPC)<br><br>G01S |
| A | * the whole document * | 4-8 | |
| A | CN 116 105 729 A (UNIV NORTHWESTERN POLYTECHNICAL) 12 May 2023 (2023-05-12) * paragraph [0030] * | 4-8 | |

The present search report has been drawn up for all claims

| Place of search | Date of completion of the search | Examiner |
|---|---|---|
| Munich | 2 May 2024 | Haugg, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 21 0075

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2024

| Patent document cited in search report | | Publication date | Patent family member(s) | | Publication date |
|---|---|---|---|---|---|
| US 2022365224 | A1 | 17-11-2022 | CA | 3219242 A1 | 12-01-2023 |
| | | | EP | 4348309 A2 | 10-04-2024 |
| | | | US | 2022365222 A1 | 17-11-2022 |
| | | | US | 2022365224 A1 | 17-11-2022 |
| | | | WO | 2023282977 A2 | 12-01-2023 |
| WO 2023180143 | A1 | 28-09-2023 | FR | 3133915 A1 | 29-09-2023 |
| | | | WO | 2023180143 A1 | 28-09-2023 |
| CN 116105729 | A | 12-05-2023 | NONE | | |

EPO FORM P0459

For more details about this annex : see Official Journal of the European Patent Office, No. 12/82

**EP 4 556 957 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3792665 A1
- EP 3035080 A2
- EP 3130943 A1
- EP 3293549 A1
- WO 2012151006 A1
- US 2012029694 W
- WO 2010021660 A2
- US 2009004476 W
- EP 22206935 A

**Non-patent literature cited in the description**

- **HOFMANN-WELLENHOF, B. et al.** GNSS, Global Navigation Satellite Systems, GPS, GLONASS, Galileo, & more. Springer-Verlag Wien, 2008
- Geometry Extra-Redundant Almost Fixed Solutions: A High Integrity Approach for Carrier Phase Ambiguity Resolution for High Accuracy Relative Navigation,. **WU, S et al.** Position, Location and Navigation Symposium, 2008, Monterey, California. IEEE/ION, 03 September 2008
- **KHANAFSEH, S.** ; **PERVAN, B.** A New Approach for Calculating Position Domain Integrity Risk for Cycle Resolution in Carrier Phase Navigation Systems. *IEEE Transactions on Aerospace and Electronic Systems*, January 2010, vol. 46 (1), 296-307
- **KHANAFSEH, S. et al.** Integrity risk of cycle resolution in the presence of bounded faults. *Proceedings of the 2012 IEEE / ION Position Location and Navigation Symposium*, 23 April 2012
- **GROVES, PAUL D.** Principles of GNSS, Inertial, and Multisensor Integrated Navigation Systems. *Artech House*, 2008, ISBN 978-1-58053-255-6
- **JAN VAN SICKLE**. Two Types of Observables | GEOG 862: GPS and GNSS for Geospatial Professionals. John A. Dutton e-Education Institute, College of Earth and Mineral Sciences, The Pennsylvania State University, 08 November 2021
- **GEORGE SIOURIS**. Aerospace Avionics Systems, A Modern Synthesis. Academic Press, 1993
- **A. LAWRENCE**. Modern Inertial Technology, Navigation Guidance and Control. Springer, 1998
- **R.G. BROWN** ; **P.Y.C. HWANG**. Introduction to Random Signals and Applied Kalman Filtering. John Wiley & Sons, 1997
- **R.M. ROGERS**. Applied Mathematics in Integrated Navigation Systems. *AIAA Education Series*, 2000
- **P.G. SAVAGE**. Strapdown Analytics, Parts 1 and 2. *Strapdown Associates*, 2000
- **S. J. JULIER** ; **J. K. UHLMANN**. A New Extension of the Kalman Filter to Nonlinear Systems. *Proceedings of AeroSense: The 11th Int. Symp. On Aerospace/-Defence Sensing, Simulation and Controls*, 1997
- **WAN, E.A.** ; **VAN DER MERWE, R**. The unscented Kalman filter for nonlinear estimation. *Proceedings of the IEEE 2000 Adaptive Systems for Signal Processing, Communications, and Control Symposium*
- **ARULAMPALAM, M.S.** ; **MASKELL, S.** ; **GORDON, N.** ; **CLAPP, T**. A tutorial on particle filters for online nonlinear/non-gaussian Bayesian tracking. *IEEE Transactions on Signal Processing*, 2002, vol. 50 (2), 174-188
- **HUBER** ; **PETER J.** Robust Statistics. John Wiley & Sons Inc, 2009